(19) Europäisches Patentamt
European Patent Office
Office européen des brevets

(11) **EP 4 593 299 A1**

(12) **EUROPEAN PATENT APPLICATION**
published in accordance with Art. 153(4) EPC

(43) Date of publication:
**30.07.2025 Bulletin 2025/31**

(21) Application number: **22959150.8**

(22) Date of filing: **22.09.2022**

(51) International Patent Classification (IPC):
**H04B 7/0456** (2017.01)    **H04L 1/00** (2006.01)

(52) Cooperative Patent Classification (CPC):
**H04B 7/0456; H04L 1/00**

(86) International application number:
**PCT/CN2022/120606**

(87) International publication number:
**WO 2024/060142 (28.03.2024 Gazette 2024/13)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Beijing Xiaomi Mobile Software Co.,
Ltd.**
**Beijing 100085 (CN)**

(72) Inventor: **ZHANG, Zhenyu**
**Beijing 100085 (CN)**

(74) Representative: **Stöckeler, Ferdinand et al
Schoppe, Zimmermann, Stöckeler
Zinkler, Schenk & Partner mbB
Patentanwälte
Radlkoferstrasse 2
81373 München (DE)**

(54) **CODEBOOK DETERMINATION METHOD FOR MULTI-ANTENNA PANEL WITH EIGHT
ANTENNA PORTS FOR UPLINK MIMO TRANSMISSION, AND APPARATUS THEREFOR**

(57)    Disclosed in the embodiments of the present disclosure are a codebook determination method for a multi-antenna panel with eight antenna ports for uplink MIMO transmission, and an apparatus therefor, which method and apparatus can be applied to a communication system. The method comprises: determining a first beam of a first transport layer; determining codebook coefficients used when constructing a codebook for eight antenna ports, wherein the codebook coefficients comprise a first co-phasing coefficient, and a compensation factor between antenna panels; and determining codewords of L layers of a multi-antenna panel with eight antenna ports according to the first beam and the codebook coefficients, wherein L is a positive integer, and L is greater than or equal to 1 and less than or equal to 4. In the embodiments of the present disclosure, high-dimensional codewords of L layers of a multi-antenna panel with eight antenna ports can be constructed on the basis of a first beam of a first transport layer and codebook coefficients, such that requirements of uplink MIMO supporting transmissions from layer 1 to layer 4 of a multi-antenna panel with eight antenna ports can be met, thereby further enhancing uplink MIMO technology.

determining a first beam of a first transmission layer — S201

determining codebook coefficients configured for constructing an 8-antenna port codebook, wherein the codebook coefficients comprise first co-phase coefficients and an inter-panel compensation factor — S202

determining, according to the first beam and the codebook coefficients, an L-layer codeword of the 8-antenna port multi-antenna panel — S203

FIG. 2

EP 4 593 299 A1

## Description

## TECHNICAL FIELD

The disclosure relates to the field of communication technologies, in particular to a method for determining an uplink multiple input multiple output (MIMO) transmission 8-antenna port multi-antenna panel codebook, and a device thereof.

## BACKGROUND

Precoding technology in MIMO systems may effectively reduce interference and a system overhead and improve a system capacity, which is an extremely important key technology in the MIMO systems. In codebook transmission based MIMO systems, codebook design is also an important part of the precoding technology. When antenna ports of uplink MIMO transmission are enhanced, for example, from 4 antenna ports to 8 antenna ports, an existing uplink MIMO transmission codebook cannot meet transmission requirements of the antenna ports enhanced.

## SUMMARY

Embodiments of the disclosure provide a method for determining an uplink MIMO transmission 8-antenna port multi-antenna panel codebook, and a device thereof, which may construct a high-dimensional 8-antenna port multi-antenna panel codeword based on a low-dimensional transmission codeword, which may enable uplink MIMO to support 1-layer to 4-layer transmission requirements of the 8-antenna port multi-antenna panel, and further enhance the uplink MIMO technology.

In a first aspect, embodiments of the present disclosure provide a method for determining an uplink MIMO transmission 8-antenna port multi-antenna panel codebook. The method includes:

determining a first beam of a first transmission layer;
determining codebook coefficients configured for constructing an 8-antenna port codebook, in which, the codebook coefficients include first co-phase coefficients and an inter-panel compensation factor;
determining, according to the first beam and the codebook coefficients, an L-layer codeword of the 8-antenna port multi-antenna panel, where L is a positive integer greater than or equal to 1 and less than or equal to 4.

In an embodiment of the present disclosure, the high-dimensional 8-antenna port multi-antenna panel codeword may be constructed based on the first beam of the first transmission layer and the codebook coefficients, which may satisfy that uplink MIMO supports 1-layer to 4-layer transmission requirements of the 8-antenna port multi-antenna panel and further enhance the uplink MIMO technology.

In a second aspect, an embodiment of the present disclosure provides a communication device. The device has part or all of functions of a terminal device for implementing the method as described in the first aspect. For example, functions of the communication device may have functions of implementing part or all of embodiments of the present disclosure, or may have functions of implementing any one of embodiments of the present disclosure separately. The functions may be implemented through hardware or by executing corresponding software through hardware. The hardware or software includes one or more units or modules corresponding to the above functions.

In an implementation, a structure of the communication device may include a transceiver module and a processing module, and the processing module is configured to support the communication device in executing the corresponding functions in the above method. The transceiver module is used to support communication between the communication device and other devices. The communication device may further include a storage module, configured to be coupled with the transceiver module and the processing module, and store a computer program and data necessary for the communication device.

As an example, the processing module may be a processor, the transceiver module may be a transceiver or a communication interface, and the storage module may be a memory.

In a third aspect, an embodiment of the present disclosure provides a communication device. The communication device includes a processor. The processor is configured to execute the method as described in the first aspect when invoking a computer program in memory.

In a fourth aspect, an embodiment of the present disclosure provides a communication device. The communication device includes a processor and a memory having a computer program stored thereon. The computer program stored in the memory causes the communication device to perform the method as described in the first aspect when performed by the processor.

In a fifth aspect, an embodiment of the present disclosure provides a communication device. The communication device includes a processor and an interface circuit. The interface circuit is configured to receive code instructions and transmit the code instructions to the processor. The processor is configured to run the code instructions, causing the communication device to perform the method as described in the first aspect.

In a sixth aspect, an embodiment of the present disclosure provides a computer-readable storage medium. The storage medium is configured to store instructions performed by the terminal device as described above. The instructions, when executed, cause the terminal device to execute the method as described in the first aspect.

In a seventh aspect, an embodiment of the present disclosure provides a computer program product including a computer program. The computer program product may cause a computer to implement the method as described in the first aspect when running on the computer.

In an eighth aspect, an embodiment of the present disclosure provides a chip system. The chip system includes at least one processor and an interface, and is configured to support a terminal device to implement functions related to the first aspect, such as determining or processing at least one of data and information related to the above method. In a possible design, the chip system further includes a memory, configured to store a computer program and data necessary for the terminal device. The chip system may be composed of chips or include a chip and other discrete devices.

In a ninth aspect, an embodiment of the present disclosure provides a computer program. The computer program may cause a computer to implement the method as described in the first aspect when running on the computer.

## BRIEF DESCRIPTION OF THE DRAWINGS

In order to clearly illustrate technical solutions of embodiments of the disclosure or background, the accompanying drawings required in embodiments of the present disclosure or the background will be explained below.

FIG. 1 is a schematic diagram illustrating an architecture of a communication system provided in an embodiment of the present disclosure.

FIG. 2 is a flowchart illustrating a method for determining an uplink MIMO transmission 8-antenna port multi-antenna panel codebook according to an embodiment of the present disclosure.

FIG. 3 is a flowchart illustrating a method for determining an uplink MIMO transmission 8-antenna port multi-antenna panel codebook according to an embodiment of the present disclosure.

FIG. 4 is a flowchart illustrating a method for determining an uplink MIMO transmission 8-antenna port multi-antenna panel codebook according to an embodiment of the present disclosure.

FIG. 5 is a flowchart illustrating a method for determining an uplink MIMO transmission 8-antenna port multi-antenna panel codebook according to an embodiment of the present disclosure.

FIG. 6 is a flowchart illustrating a method for determining an uplink MIMO transmission 8-antenna port multi-antenna panel codebook according to an embodiment of the present disclosure.

FIG. 7 is a flowchart illustrating a method for determining an uplink MIMO transmission 8-antenna port multi-antenna panel codebook according to an embodiment of the present disclosure.

FIG. 8 is a flowchart illustrating a method for determining an uplink MIMO transmission 8-antenna port multi-antenna panel codebook according to an embodiment of the present disclosure.

FIG. 9 is a flowchart illustrating a method for determining an uplink MIMO transmission 8-antenna port multi-antenna panel codebook according to an embodiment of the present disclosure.

FIG. 10 is a flowchart illustrating a codebook-based uplink transmission method according to an embodiment of the present disclosure.

FIG. 11 is a flowchart illustrating a codebook-based uplink transmission method according to an embodiment of the present disclosure.

FIG. 12 is a block diagram illustrating a structure of a communication device according to an embodiment of the present disclosure.

FIG. 13 is a block diagram illustrating a structure of a communication device according to an embodiment of the present disclosure.

FIG. 14 is a block diagram illustrating a structure of a chip according to an embodiment of the present disclosure.

## DETAILED DESCRIPTION

Embodiments will be described in detail herein, examples of which are illustrated in the accompanying drawings. The following description refers to the accompanying drawings in which the same numbers in different drawings represent the same or similar elements unless otherwise represented. The implementations set forth in the following description of embodiments do not represent all implementations consistent with embodiments of the disclosure. Instead, they are merely examples of apparatuses and methods consistent with aspects related to the disclosure as recited in the appended claims.

The terms used in embodiments of the present disclosure are only for the purpose of describing specific embodiments, and are not intended to limit embodiments of the present disclosure. The singular forms "a" and "the" used in embodiments of the present disclosure and the appended claims are also intended to include plural forms unless the context clearly indicates otherwise. It is also understood that the term "and/or" as used herein refers to and includes any and all possible combinations of one or more of associated listed items.

It should be understood that, although the terms first, second, third, etc. may be used in embodiments of the present disclosure to describe various information, such information shall not be limited to these terms. These terms are only used to distinguish the same category of information. For example, subject to the scope of embodiments of the present disclosure, first information may also be referred to as second information, and similarly, second information may also be referred to as first information. It depends on the context. For example, the word "if" as used herein may be interpreted as "upon" or "when" or "in response to determining". For the purposes of brevity and ease of understanding, the disclosure uses the terms "greater than" or "less than", "higher than" or "lower than" herein in a case of characterizing a size relationship. Those skilled in the art may understand that: the term "greater than" also covers the meaning of "greater than or equal to", and the term "less than" also covers the meaning of "less than or equal to"; the term "higher than" covers the meaning of "higher than or equal to", the term "less than" also covers the meaning of "less than or equal to".

To facilitate understanding, terms involved in the disclosure are introduced first.

A physical uplink shared channel (PUSCH) is used to carry data from a transmission channel PUSCH.

Coherence transmission is defined as a UE capability. A coherence transmission capability of the UE includes:

Full coherence transmission: all antenna ports may transmit coherently.

Partial coherence transmission: antenna ports in the same coherence transmission group can transmit coherently, but antenna ports in different coherence transmission groups cannot transmit coherently. Each coherence transmission group includes at least two antenna ports.

Non coherence transmission: no antenna port can transmit coherently.

With a method for determining an uplink MIMO transmission 8-antenna port multi-antenna panel codebook disclosed in embodiments of the disclosure, a codeword applicable to antenna fully coherence transmission in a communication system is determined. A communication system to which embodiments of the present disclosure are applicable is first described below.

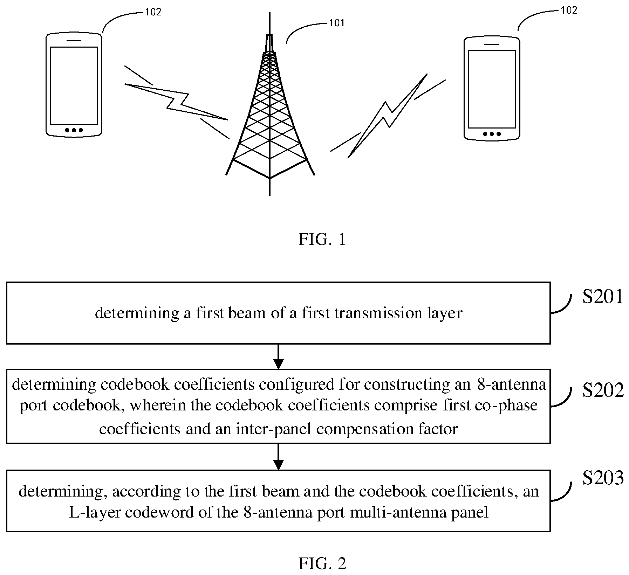

Please refer to FIG. 1, FIG. 1 is a structural diagram of a communication system provided by an embodiment of the disclosure. The communication system may include, but is not limited to, one network device and one terminal device. The number and the form of devices illustrated in FIG. 1 are only for examples and do not constitute a limitation on the embodiments of the disclosure. The communication system may include two or more network devices and two or more terminal devices in practical applications. The communication system illustrated in FIG. 1 includes, for example, a network device 101 and a terminal device 102.

It is noteworthy that the technical solutions of the embodiments of the disclosure may be applied to various communication systems, such as, a long term evolution (LTE) system, a 5th generation (5G) mobile communication system, a 5G NR (new radio) system, or other future new mobile communication systems. It should also be noted that a sidelink in an embodiment of the present disclosure may also be called as a side link or a direct link.

The network device 101 in embodiments of the disclosure is an entity on a network side for transmitting or receiving signals. For example, the network device 101 may be an evolved NodeB (eNB), a transmission reception point (TRP), a next generation NodeB (gNB) in a NR system, a base station in other future mobile communication systems, or an access node in a wireless fidelity (WiFi) system. The specific technology and specific device form adopted by the network device are not limited in the embodiments of the disclosure. The network device according to the embodiments of the disclosure may be composed of a central unit (CU) and distributed units (DUs). The CU may also be referred to as a control unit. The use of CU-DU structure allows to divide a protocol layer of the network device, such as a base station, such that some of the protocol layer functions are placed in the CU for centralized control, and some or all of the remaining protocol layer functions are distributed in the DUs, and the DUs are centrally controlled by the CU.

The terminal device 102 in embodiments of the disclosure is an entity on a user side for receiving or transmitting signals, such as a cellular phone. The terminal device may also be referred to as a terminal, a user equipment (UE), a mobile station (MS), a mobile terminal (MT), and the like. The terminal device can be a car with communication functions, a smart car, a mobile phone, a wearable device, a Pad, a computer with wireless transceiver functions, a virtual reality (VR) terminal device, an augmented reality (AR) terminal device, a wireless terminal device in industrial control, a wireless terminal device in self-driving, a wireless terminal device in remote medical surgery, a wireless terminal device in smart grid, a wireless terminal device in transportation safety, a wireless terminal device in smart city, a wireless terminal device in smart home, etc. The specific technology and specific device form adopted by the terminal device are not limited in the embodiments of the disclosure.

In sidelink communication, there are 4 sidelink transmission modes. Sidelink transmission mode 1 and sidelink transmission mode 2 are used for terminal device direct (device-to-device, D2D) communication. Sidelink transmission mode 3 and sidelink transmission mode 4 are used for V2X communications. When the sidelink transmission mode 3 is adopted, resource allocation is scheduled by the network device 101. Specifically, the network device 101 may send resource allocation information to the terminal device 102, and then the terminal device 102 allocates resources to another terminal device, so that another terminal device may send information to the network device 101 through the allocated resources. In the V2X communication, a terminal device with better signal or higher reliability may be used as the terminal device 102. A first terminal device mentioned in an embodiment of the present disclosure may refer to the terminal device 102, and a second terminal device may refer to another terminal device.

It is understandable that the communication system described in embodiments of the disclosure is intended to clearly illustrate the technical solutions according to the embodiments of the disclosure, and does not constitute a limitation on the technical solutions according to the embodiments of the disclosure. It is understandable by those skilled in the art that as system architectures evolve and new business scenarios emerge, the technical solutions according to the embodiments of the disclosure are also applicable to similar technical problems.

It should be noted that a method for determining an uplink MIMO transmission 8-antenna port multi-antenna panel codebook provided by any embodiment of the present disclosure may be executed alone, or may be executed in combination with possible implementation methods in other embodiments, or may be executed in combination with any technical solution in related arts.

A method for determining an uplink MIMO transmission 8-antenna port multi-antenna panel codebook and a device thereof provided by the present disclosure will be introduced in detail below with reference to the accompanying drawings.

Please refer to FIG. 2, FIG. 2 is a flowchart illustrating a method for determining an uplink MIMO transmission 8-antenna port multi-antenna panel codebook according to an embodiment of the present disclosure. As illustrated in FIG. 2, the method may include, but is not limited to, the following steps.

At step 201, a first beam of a first transmission layer is determined.

As transmission requirements and transmission scenarios increase, uplink transmission may support increased antenna ports and uplink transmission layers, that is, the count of antenna ports may be increased from 4 antenna ports to a maximum of 8 antenna ports.

In an embodiment of the present disclosure, in order to uplink MIMO transmission supporting 8-antenna port transmission, a downlink type I (DLType I) multi-antenna panel codebook design in the existing protocol R15 may be referred to when designing the uplink MIMO transmission 8-antenna port multi-antenna panel codebook. The downlink type I (DLType I) multi-antenna panel codebook design in the existing protocol R15 only supports 1 to 4 transmission layers, therefore, the uplink MIMO transmission 8-antenna port multi-antenna panel codebook provided in an embodiment of the present disclosure only supports 1 to 4 transmission layers, that is, a count of transmission layers, L, is a positive integer greater than or equal to 1 and less than or equal to 4.

In an embodiment of the present disclosure, the first beam $v_{l,m}$ of the first transmission layer may be predetermined. A calculation formula of the beam is provided as:

$$u_m = \begin{cases} \begin{bmatrix} 1 & e^{j\frac{2\pi m}{O_2 N_2}} & \cdots & e^{j\frac{2\pi m(N_2-1)}{O_2 N_2}} \end{bmatrix} & N_2 > 1 \\ 1 & N_2 = 1 \end{cases}$$

$$v_{l,m} = \begin{bmatrix} u_m & e^{j\frac{2\pi l}{O_1 N_1}} u_m & \cdots & e^{j\frac{2\pi l(N_1-1)}{O_1 N_1}} u_m \end{bmatrix}^T$$

where $N_1$ and $N_2$ are a count of antenna ports in a first dimension and a count of antenna ports in a second dimension respectively, and $O_1$ and $O_2$ are an oversampling value in the first dimension and an oversampling value in the second dimension respectively.

At step S202, codebook coefficients configured for constructing an 8-antenna port codebook are determined, in which, the codebook coefficients include first co-phase coefficients and an inter-panel compensation factor.

Optionally, in a case of a multi-antenna panel, the codeword coefficients include a co-phase coefficients and a compensation factor of the antenna panel. It should be noted that for different antenna structures, the corresponding co-phase coefficients are different.

Each antenna panel includes a first polarization direction and a second polarization direction. Optionally, a co-phase coefficient in the first polarization direction is determined as 1, and a co-phase coefficient in the second polarization direction is determined as $\varphi_n$.

Optionally, an inter-panel compensation factor of an $n_g$-th antenna panel is $\varphi_{p_{n_g-1}}$, that is, an inter-panel compensation factor of a first antenna panel may be $\varphi_{p_0}$, an inter-panel compensation factor of a second antenna panel may be $\varphi_{p_1}$, and so on.

Optionally, the co-phase coefficient may be determined using the following formula: $\varphi_n = e^{j\pi n/2}$. Optionally, the co-phase coefficient may be indicated by an index of the co-phase coefficient through network.

Optionally, the inter-panel compensation factor may be determined using the following formula: $\varphi_p = e^{j\pi n/2}$. Optionally, the inter-panel compensation factor may be indicated by an index of the inter-panel compensation factor through network.

Optionally, the network can indicate it through the index of the compensation factor between antenna panels.

At step S203, an L-layer codeword of the 8-antenna port multi-antenna panel is determined according to the first beam and the codebook coefficients.

It should be noted that L is used to represent a maximum number of transmission layers of uplink MIMO transmission supported by a terminal device. A value of L is a positive integer, and L is greater than or equal to 1 and less than or equal to 4.

Optionally, a first codeword of the L-layer codeword of the 8-antenna port multi-antenna panel for a first antenna panel is determined according to the first beam and the co-phase coefficients. Optionally, a second beam orthogonal to the first beam is determined, and second co-phase coefficients that are able to make codewords orthogonal is determined according to the first co-phase coefficients. Further, the first codeword for the first antenna panel is determined according to at least part of parameters of the first beam and the second beam, the first co-phase coefficients and the second co-phase coefficients, that is, the first codeword for the first antenna panel may be determined according to part or all of the parameters in the first beam and the second beam, and the first co-phase coefficients and the second co-phase coefficients. It can be understood that the first beam and the second beam are two-dimensional (2D) discrete Fourier transform (DFT) beams.

In some implementations, the first codeword for the first antenna panel may be determined according to the first beam and the second beam, the first co-phase coefficients and the second co-phase coefficients. For example, the first codeword for the first antenna panel may be obtained by combining the first beam with the first co-phase coefficients and the second co-phase coefficients, respectively, and combining the second beam with the first co-phase coefficients and the second co-phase coefficients, respectively.

In some other implementations, the first codeword for the first antenna panel may be obtained by combining the first beam with the first co-phase coefficients, and combining the second beam with the first co-phase coefficients.

In some other implementations, the first codeword for the first antenna panel may be obtained by combining the first beam with the first co-phase coefficients and the second co-phase coefficients, respectively.

Further, a second codeword of the L-layer codeword of the 8-antenna port multi-antenna panel for the $n_g$-th antenna panel is determined according to the first codeword of the L-layer codeword of the 8-antenna port multi-antenna panel for the first antenna panel and the inter-panel compensation factor of the $n_g$-th antenna panel, where $2 \leq n_g \leq N_g$, $N_g$ is a count of antenna panels.

In an embodiment of the present disclosure, a high-dimensional 8-antenna port multi-antenna panel codeword may be constructed based on the first beam of the first transmission layer and the codebook coefficients, which may satisfy that uplink MIMO supports 1-layer to 4-layer transmission requirements of the 8-antenna port multi-antenna panel and further enhance the uplink MIMO technology.

In an implementation, 8 antenna ports may be divided into 1 or 2 or 4 port groups. The port group may be defined as a panel or other possible definitions, antenna ports within the antenna port group may be transmitted coherently, and antenna ports between antenna port groups may perform coherence or non-coherence transmission. Therefore, the following multi-antenna panel situations may be considered.

Case a1, the count of antenna port groups is 2, the count of antenna panels is 2, and coherence transmission is performed between two panels.

Case a2, the count of antenna port groups is 2, the count of antenna panels is 2, and non-coherence transmission is performed between two panels.

Case b1, the count of antenna port groups is 4, the count of antenna panels is 4, and the coherence transmission is performed between four panels.

Case b2, the count of antenna port groups is 4, the count of antenna panels is 4, the coherence transmission is performed on one panel, and the coherence transmission is performed on the other three panels.

Case b3, the count of antenna port groups is 4, the count of antenna panels is 4, the coherence transmission is performed between two panels, and the coherence transmission is performed between the other two panels.

Case b4, the count of antenna port groups is 4, the count of antenna panels is 4, and the non-coherence transmission is performed between four panels.

The above different situations can be summarized into the following three coherence transmission modes of multi-antenna panels:
Transmission mode 1: fully coherence transmission between antenna panels corresponds to case a1 and case b1.

Transmission mode 2: partial coherence transmission between antenna panels corresponds to case b2 and case b3.

Transmission mode 3: non-coherence transmission between antenna panels corresponds to case a2 and case b4.

The following describes the codebook determination process of the three coherence transmission modes of multi-antenna panels respectively.

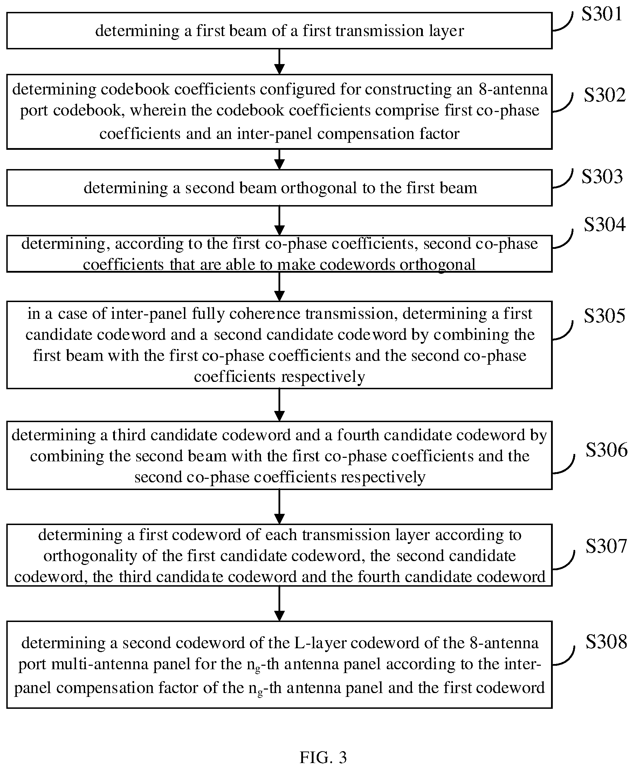

For transmission mode 1: fully coherence transmission between antenna panels, please refer to FIG. 3. FIG. 3 is a flowchart illustrating a method for determining an uplink MIMO transmission 8-antenna port multi-antenna panel codebook corresponding to transmission mode 1. As shown in FIG. 3, the method may include, but is not limited to, the following steps.

At step S301, a first beam of a first transmission layer is determined.

At step S302, codebook coefficients configured for constructing an 8-antenna port codebook are determined, in which, the codebook coefficients include first co-phase coefficients and an inter-panel compensation factor.

At step S303, a second beam orthogonal to the first beam is determined.

At step S304, second co-phase coefficients that are able to make codewords orthogonal is determined according to the first co-phase coefficients.

For a detailed description of steps S301 to S304, reference can be made to relevant contents in the above embodiments, which will not be repeated here.

At step S305, in a case of inter-panel fully coherence transmission, a first candidate codeword and a second candidate codeword are determined by combining the first beam with the first co-phase coefficients and the second co-phase coefficients respectively.

At step S306, a third candidate codeword and a fourth candidate codeword are determined by combining the second beam with the first co-phase coefficients and the second co-phase coefficients respectively.

In an embodiment of the present disclosure, the first beam is denoted as $v_{l,m}$, the second beam is denoted as $v_{l',m'}$, the first co-phase coefficients include 1 and $\varphi_n$, and the second co-phase coefficients include 1 and $-\varphi_n$.

The first beam is combined with the first co-phase coefficients to obtain the first candidate codeword: $[v_{l,m} \ \varphi_n v_{l,m}]^T$, and the first beam is combined with the second co-phase coefficients to obtain the second candidate codeword: $[v_{l,m} - \varphi_n v_{l,m}]^T$.

The second beam is combined with the first co-phase coefficients to obtain the third candidate codeword: $[v_{l',m'} \ \varphi_n v_{l',m'}]^T$, and the second beam is combined with the second co-phase coefficients to obtain the fourth candidate codeword: $[v_{l',m'} - \varphi_n v_{l',m'}]^T$.

At step 307, the first codeword for the first antenna panel is determined according to orthogonality of the first candidate codeword, the second candidate codeword, the third candidate codeword and the fourth candidate codeword.

In case of the count of antenna panels being 2, the first codeword for the first antenna panel may be:

$$\begin{bmatrix} v_{l,m} & v_{l',m'} & v_{l,m} & v_{l',m'} \\ \varphi_n v_{l,m} & \varphi_n v_{l',m'} & -\varphi_n v_{l,m} & -\varphi_n v_{l',m'} \end{bmatrix} \text{ or } \begin{bmatrix} v_{l,m} & v_{l,m} & v_{l',m'} & v_{l',m'} \\ \varphi_n v_{l,m} & -\varphi_n v_{l,m} & \varphi_n v_{l',m'} & -\varphi_n v_{l',m'} \end{bmatrix}.$$

It should be noted that this is only an example. In a case of fully coherence transmission, the codeword of each layer can ensure orthogonality between every two transmission layers.

At step 308, a second codeword of the L-layer codeword of the 8-antenna port multi-antenna panel for the $n_g$-th antenna panel is determined according to the first codeword of the L-layer codeword of the 8-antenna port multi-antenna panel for the first antenna panel and the inter-panel compensation factor of the $n_g$-th antenna panel.

$2 \leq n_g \leq N_g$, $N_g$ is a count of antenna panels.

Optionally, the second codeword of the L-layer codeword of the 8-antenna port multi-antenna panel for the $n_g$-th antenna panel is determined by multiplying the first codeword for the first antenna panel by the inter-panel compensation factor of the $n_g$-th antenna panel, $\varphi_{p_{n_g-1}}$.

In a case of the count of antenna panels being 2, the inter-panel compensation factor of the second antenna panel is $\varphi_{p1}$, then the second codeword of the second antenna panel may be provided as:

$$\begin{bmatrix} \varphi_{p_1} v_{l,m} & \varphi_{p_1} v_{l',m'} & \varphi_{p_1} v_{l,m} & \varphi_{p_1} v_{l',m'} \\ \varphi_n \varphi_{p_1} v_{l,m} & \varphi_n \varphi_{p_1} v_{l',m'} & -\varphi_n \varphi_{p_1} v_{l,m} & -\varphi_n \varphi_{p_1} v_{l',m'} \end{bmatrix}$$

or

$$\begin{bmatrix} \varphi_{p_1} v_{l,m} & \varphi_{p_1} v_{l,m} & \varphi_{p_1} v_{l',m'} & \varphi_{p_1} v_{l',m'} \\ \varphi_n \varphi_{p_1} v_{l,m} & -\varphi_n \varphi_{p_1} v_{l,m} & \varphi_n \varphi_{p_1} v_{l',m'} & -\varphi_n \varphi_{p_1} v_{l',m'} \end{bmatrix}$$

It should be noted that this is only an example. In a case of fully coherence transmission, the codeword of each layer can ensure orthogonality between every two transmission layers.

As an example, in the case of inter-panel fully coherence transmission, when the count of antenna panels is 2 and the count of transmission layers is 4, the obtained uplink MIMO transmission 8-antenna port multi-antenna panel fully coherence codeword is provided as:

$$W_{2,4}^F = \begin{bmatrix} v_{l,m} & v_{l',m'} & v_{l,m} & v_{l',m'} \\ \varphi_n v_{l,m} & \varphi_n v_{l',m'} & -\varphi_n v_{l,m} & -\varphi_n v_{l',m'} \\ \varphi_{p_1} v_{l,m} & \varphi_{p_1} v_{l',m'} & \varphi_{p_1} v_{l,m} & \varphi_{p_1} v_{l',m'} \\ \varphi_n \varphi_{p_1} v_{l,m} & \varphi_n \varphi_{p_1} v_{l',m'} & -\varphi_n \varphi_{p_1} v_{l,m} & -\varphi_n \varphi_{p_1} v_{l',m'} \end{bmatrix}$$

or

$$W_{2,4}^F = \begin{bmatrix} v_{l,m} & v_{l,m} & v_{l',m'} & v_{l',m'} \\ \varphi_n v_{l,m} & -\varphi_n v_{l,m} & \varphi_n v_{l',m'} & -\varphi_n v_{l',m'} \\ \varphi_{p_1} v_{l,m} & \varphi_{p_1} v_{l,m} & \varphi_{p_1} v_{l',m'} & \varphi_{p_1} v_{l',m'} \\ \varphi_n \varphi_{p_1} v_{l,m} & -\varphi_n \varphi_{p_1} v_{l,m} & \varphi_n \varphi_{p_1} v_{l',m'} & -\varphi_n \varphi_{p_1} v_{l',m'} \end{bmatrix} .$$

It should be noted that $W_{N_g,L}^c$ represents a codeword with the count of antenna panels being $N_g$ and the count of layers being L. The symbol c represents coherence, and F, P, and N represent the three coherence modes of fully coherence, partial coherence, or non-coherence, respectively. The description applies to each of the following embodiments and will not be described again. For example, $W_{2,4}^F$ represents a codeword with a count of antenna panels being 2 and a maximum count of transmission layers being 4. The symbol F represents the fully coherence transmission mode.

In an embodiment of the present disclosure, the high-dimensional 8-antenna port multi-antenna panel codeword for fully coherence transmission may be constructed based on the first beam of the first transmission layer and the codebook coefficients, which may satisfy that uplink MIMO supports 1-layer to 4-layer transmission requirements of the 8-antenna port multi-antenna panel and further enhance the uplink MIMO technology.

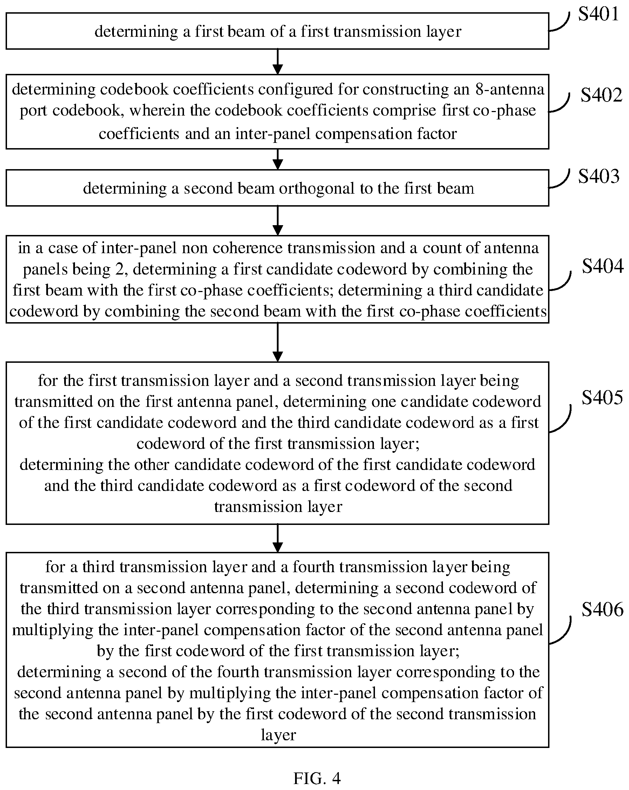

For transmission mode 2: non coherence transmission between antenna panels, please refer to FIG. 4. FIG. 4 is a flowchart illustrating a method for determining an uplink MIMO transmission 8-antenna port multi-antenna panel codebook corresponding to transmission mode 2. As shown in FIG. 4, the method may include, but is not limited to, the following steps.

At step S401, a first beam of a first transmission layer is determined.

At step S402, codebook coefficients configured for constructing an 8-antenna port codebook are determined, in which, the codebook coefficients include first co-phase coefficients and an inter-panel compensation factor.

At step S403, a second beam orthogonal to the first beam is determined.

For a detailed description of steps S401 to S403, reference can be made to relevant contents in the above embodiments, which will not be repeated here.

In an embodiment of the present disclosure, an orthogonal second beam is selected for the first beam in the antenna panel, where the first beam is denoted as $v_{l,m}$, the second beam is denoted as $v_{l',m'}$, and the first co-phase coefficients include 1 and $\varphi_n$.

At step S404, in a case of inter-panel non coherence transmission and a count of antenna panels being 2, a first candidate codeword is determined by combining the first beam with the first co-phase coefficients, and a third candidate codeword is determined by combining the second beam with the first co-phase coefficients.

In an embodiment of the present disclosure, an orthogonal second beam is selected for the first beam in the antenna panel, where the first beam is denoted as $v_{l,m}$, the second beam is denoted as $v_{l',m'}$, and the first co-phase coefficients include 1 and $\varphi_n$.

The first beam is combined with the first co-phase coefficients to obtain the first candidate codeword: $[v_{l,m} \ \varphi_n v_{l,m}]^T$, and the second beam is combined with the first co-phase coefficients to obtain the third candidate codeword: $[v_{l',m'} \ \varphi_n v_{l',m'}]^T$.

At step S405, for the first transmission layer and a second transmission layer being transmitted on the first antenna panel, one candidate codeword among the first candidate codeword and the second candidate codeword is determined as a first codeword of the first transmission layer, and the other candidate codeword among the first candidate codeword and the second candidate codeword is determined as a first codeword of the second transmission layer.

Optionally, the first candidate codeword $[v_{l,m} \ \varphi_n v_{l,m}]^T$ is selected as the first codeword of the first transmission layer, and the third candidate codeword $[v_{l',m'} \ \varphi_n v_{l',m'}]^T$ is selected as the first codeword of the second transmission layer,

$$\begin{bmatrix} v_{l,m} & v_{l',m'} \\ \varphi_n v_{l,m} & \varphi_n v_{l',m'} \end{bmatrix}$$

that is, the first codeword for the first antenna panel is provided as: .

Optionally, the third candidate codeword $[v_{l',m'} \ \varphi_n v_{l',m'}]^T$ is selected as the first codeword of the first transmission layer, and the first candidate codeword $[v_{l,m} \ \varphi_n v_{l,m}]^T$ is selected as the first codeword of the second transmission layer, that

$$\begin{bmatrix} v_{l',m'} & v_{l,m} \\ \varphi_n v_{l',m'} & \varphi_n v_{l,m} \end{bmatrix}$$

is, the first codeword for the first antenna panel is provided as: .

At step S406, for a third transmission layer and a fourth transmission layer being transmitted on a second antenna panel, a second codeword of the third transmission layer corresponding to the second antenna panel is determined by multiplying the inter-panel compensation factor of the second antenna panel by the first codeword of the first transmission layer, and a second of the fourth transmission layer corresponding to the second antenna panel is determined by multiplying the inter-panel compensation factor of the second antenna panel by the first codeword of the second transmission layer.

In a case of the count of antenna panels being 2, the inter-panel compensation factor of the second antenna panel is $\varphi_{p1}$.

Optionally, the first candidate codeword $[v_{l,m} \ \varphi_n v_{l,m}]^T$ is selected as the first codeword of the first transmission layer, then the second codeword of the third transmission layer is $\varphi_{p1} v_{l,m} \ \varphi_n \varphi_{p1} v_{l,m}]^T$. The third candidate codeword $[v_{l',m'} \ \varphi_n v_{l',m'}]^T$ is selected as the first codeword of the second transmission layer, then the second codeword of the fourth transmission layer is $[\varphi_{p1} v_{l',m'} \ \varphi_n \varphi_{p1} v_{l',m'}]^T$. That is, the second codeword of the second antenna panel is provided as

$$\begin{bmatrix} \varphi_{p_1} v_{l,m} & \varphi_{p_1} v_{l',m'} \\ \varphi_n \varphi_{p_1} v_{l,m} & \varphi_n \varphi_{p_1} v_{l',m'} \end{bmatrix}$$
.

Optionally, the third candidate codeword $[v_{l',m'} \ \varphi_n v_{l',m'}]^T$ is selected as the first codeword of the first transmission layer, then the second codeword of the third transmission layer is $[\varphi_{p1} v_{l',m'} \ \varphi_n \varphi_{p1} v_{l',m'}]^T$. The first candidate codeword $[v_{l,m} \ \varphi_n v_{l,m}]^T$ is selected as the first codeword of the second transmission layer. The second codeword of the fourth transmission layer is $[\varphi_{p1} v_{l,m} \ \varphi_n \varphi_{p1} v_{l,m}]^T$. That is, the first codeword of the second antenna panel is provided as

$$\begin{bmatrix} \varphi_{p_1} v_{l',m'} & \varphi_{p_1} v_{l,m} \\ \varphi_n \varphi_{p_1} v_{l',m'} & \varphi_n \varphi_{p_1} v_{l,m} \end{bmatrix}$$
.

As an example, in the case of inter-panel non coherence transmission, when the count of antenna panels is 2 and the count of transmission layers is 4, the obtained uplink MIMO transmission 8-antenna port multi-antenna panel non coherence codeword is provided as:

$$W_{2,4}^N = \begin{bmatrix} v_{l,m} & v_{l',m'} & 0 & 0 \\ \varphi_n v_{l,m} & \varphi_n v_{l',m'} & 0 & 0 \\ 0 & 0 & \varphi_{p_1} v_{l,m} & \varphi_{p_1} v_{l',m'} \\ 0 & 0 & \varphi_n \varphi_{p_1} v_{l,m} & \varphi_n \varphi_{p_1} v_{l',m'} \end{bmatrix}$$

or

$$W_{2,4}^N = \begin{bmatrix} v_{l',m'} & v_{l,m} & 0 & 0 \\ \varphi_n v_{l',m'} & \varphi_n v_{l,m} & 0 & 0 \\ 0 & 0 & \varphi_{p_1} v_{l',m'} & \varphi_{p_1} v_{l,m} \\ 0 & 0 & \varphi_n \varphi_{p_1} v_{l',m'} & \varphi_n \varphi_{p_1} v_{l,m} \end{bmatrix}.$$

In an embodiment of the present disclosure, the high-dimensional 8-antenna port multi-antenna panel codeword for non coherence transmission may be constructed based on the first beam of the first transmission layer and the codebook coefficients, which may satisfy that uplink MIMO supports 1-layer to 4-layer transmission requirements of the 8-antenna port multi-antenna panel and further enhance the uplink MIMO technology.

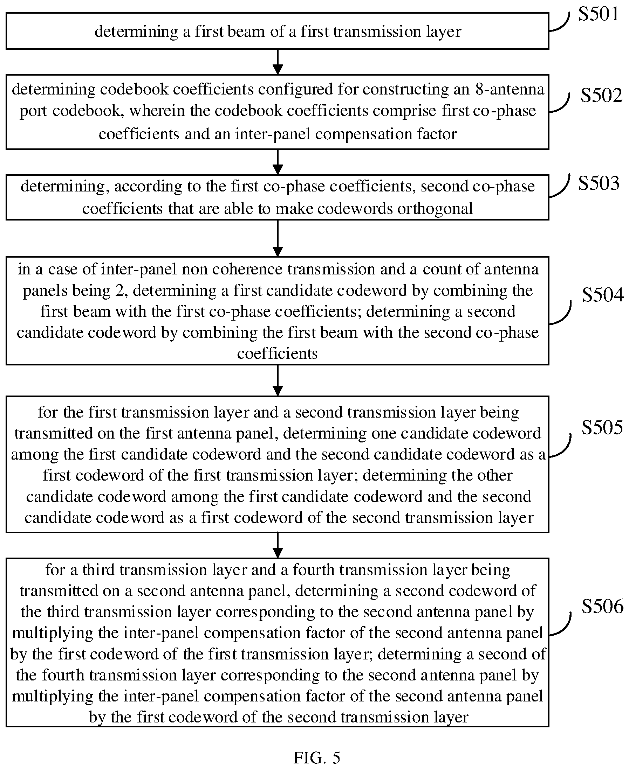

For transmission mode 2: non coherence transmission between antenna panels, please refer to FIG. 5. FIG. 5 is a flowchart illustrating a method for determining an uplink MIMO transmission 8-antenna port multi-antenna panel codebook corresponding to transmission mode 2. As shown in FIG. 5, the method may include, but is not limited to, the following steps.

At step S501, a first beam of a first transmission layer is determined.

At step S502, codebook coefficients configured for constructing an 8-antenna port codebook are determined, in which, the codebook coefficients include first co-phase coefficients and an inter-panel compensation factor.

At step S503, second co-phase coefficients that are able to make codewords orthogonal are determined according to the first co-phase coefficients.

In an embodiment of the present disclosure, the first co-phase coefficients include 1 and $\varphi_n$. The second co-phase coefficients that are able to make codewords orthogonal are 1 and $-\varphi_n$.

For a detailed description of steps S501 to S503, reference can be made to relevant contents in the above embodiments, which will not be repeated here.

At step S504, in a case of inter-panel non coherence transmission and a count of antenna panels being 2, a first candidate codeword is determined by combining the first beam with the first co-phase coefficients, and a second candidate codeword is determined by combining the first beam with the second co-phase coefficients.

In an embodiment of the present disclosure, the first beam is denoted as $v_{l,m}$. The first beam $v_{l,m}$ may be combined with the first co-phase coefficients to obtain the first candidate codeword: $[v_{l,m}\ \varphi_n v_{l,m}]^T$, and the first beam $v_{l,m}$ may be combined with the second co-phase coefficients to obtain the second candidate codeword: $[v_{l,m}\ -\varphi_n v_{l,m}]^T$.

At step S505, for the first transmission layer and a second transmission layer being transmitted on the first antenna panel, one candidate codeword among the first candidate codeword and the second candidate codeword is determined as a first codeword of the first transmission layer, and the other candidate codeword among the first candidate codeword and the second candidate codeword is determined as a first codeword of the second transmission layer.

Optionally, the first candidate codeword $[v_{l,m}\ \varphi_n v_{l,m}]^T$ is selected as the first codeword of the first transmission layer, and the second candidate codeword $[v_{l,m}\ -\varphi_n v_{l,m}]^T$ is selected as the first codeword of the second transmission layer,

$$\begin{bmatrix} v_{l,m} & v_{l,m} \\ \varphi_n v_{l,m} & -\varphi_n v_{l,m} \end{bmatrix}$$

that is, the first codeword for the first antenna panel is provided as .

Optionally, the second candidate codeword $[v_{l,m}\ -\varphi_n v_{l,m}]^T$ is selected as the first codeword of the first transmission layer, and the first candidate codeword $[v_{l,m}\ \varphi_n v_{l,m}$ is selected as the first codeword of the second transmission layer, that is,

$$\begin{bmatrix} v_{l,m} & v_{l,m} \\ -\varphi_n v_{l,m} & \varphi_n v_{l,m} \end{bmatrix}$$

the first codeword of the first antenna panel is provided as .

At step S506, for a third transmission layer and a fourth transmission layer being transmitted on a second antenna panel, a second codeword of the third transmission layer corresponding to the second antenna panel is determined by multiplying the inter-panel compensation factor of the second antenna panel by the first codeword of the first transmission layer, and a second of the fourth transmission layer corresponding to the second antenna panel is determined by multiplying the inter-panel compensation factor of the second antenna panel by the first codeword of the second transmission layer.

In a case of the count of antenna panels being 2, the inter-panel compensation factor of the second antenna panel is $\varphi_{p1}$.

Optionally, the first candidate codeword $[v_{l,m}\ \varphi_n v_{l,m}]^T$ is selected as the first codeword of the first transmission layer, then the second codeword of the third transmission layer is $[\varphi_{p1} v_{l,m}\ \varphi_n \varphi_{p1} v_{l,m}]^T$. The second candidate codeword $[v_{l,m}\ -\varphi_n v_{l,m}]^T$ is selected as the first codeword of the second transmission layer. Then the second codeword of the fourth transmission layer is $[\varphi_{p1} v_{l,m}\ -\varphi_n \varphi_{p1} v_{l,m}]^T$. That is, the second codeword of the second antenna panel is provided as

$$\begin{bmatrix} \varphi_{p_1} v_{l,m} & \varphi_{p_1} v_{l,m} \\ \varphi_n \varphi_{p_1} v_{l,m} & -\varphi_n \varphi_{p_1} v_{l,m} \end{bmatrix}.$$

Optionally, the second candidate codeword $[v_{l,m}\ -\varphi_n v_{l,m}]^T$ is selected as the first codeword of the first transmission layer, then the second codeword of the third transmission layer is $[\varphi_{p1} v_{l,m}\ -\varphi_n \varphi_{p1} v_{l,m}]^T$. The first candidate codeword $[v_{l,m}\ \varphi_n v_{l,m}]^T$ is selected as the first codeword of the second transmission layer, then the second codeword of the fourth transmission layer is $[\varphi_{p1} v_{l,m}\ \varphi_n \varphi_{p1} v_{l,m}]^T$. That is, the second codeword of the second antenna panel is provided as

$$\begin{bmatrix} \varphi_{p_1} v_{l,m} & \varphi_{p_1} v_{l,m} \\ -\varphi_n \varphi_{p_1} v_{l,m} & \varphi_n \varphi_{p_1} v_{l,m} \end{bmatrix}.$$

As an example, in the case of inter-panel non coherence transmission, when the count of antenna panels is 2 and the count of transmission layers is 4, the obtained uplink MIMO transmission 8-antenna port multi-antenna panel non coherence codeword is provided as:

$$W_{2,4}^N = \begin{bmatrix} v_{l,m} & v_{l,m} & 0 & 0 \\ \varphi_n v_{l,m} & -\varphi_n v_{l,m} & 0 & 0 \\ 0 & 0 & \varphi_{p_1} v_{l,m} & \varphi_{p_1} v_{l,m} \\ 0 & 0 & \varphi_n \varphi_{p_1} v_{l,m} & -\varphi_n \varphi_{p_1} v_{l,m} \end{bmatrix}$$

or

$$W_{2,4}^N = \begin{bmatrix} v_{l',m'} & v_{l,m} & 0 & 0 \\ \varphi_n v_{l',m'} & \varphi_n v_{l,m} & 0 & 0 \\ 0 & 0 & \varphi_{p_1} v_{l',m'} & \varphi_{p_1} v_{l,m} \\ 0 & 0 & \varphi_n \varphi_{p_1} v_{l',m'} & \varphi_n \varphi_{p_1} v_{l,m} \end{bmatrix}.$$

In an embodiment of the present disclosure, the high-dimensional 8-antenna port multi-antenna panel codeword for non coherence transmission may be constructed based on the first beam of the first transmission layer and the codebook coefficients, which may satisfy that uplink MIMO supports 1-layer to 4-layer transmission requirements of the 8-antenna port multi-antenna panel and further enhance the uplink MIMO technology.

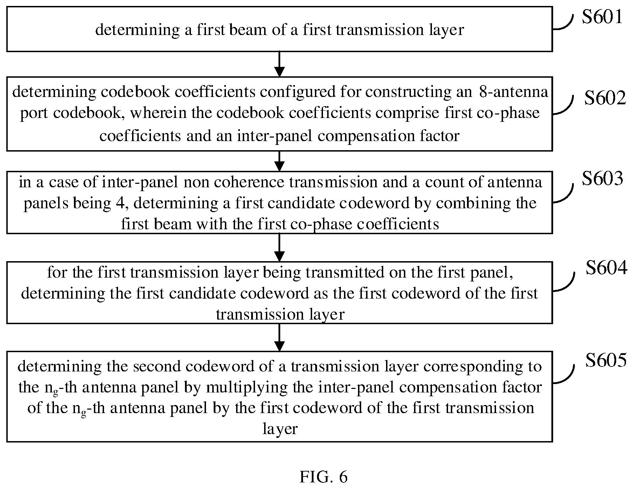

For transmission mode 2: non coherence transmission between antenna panels, please refer to FIG. 6. FIG. 6 is a flowchart illustrating a method for determining an uplink MIMO transmission 8-antenna port multi-antenna panel codebook corresponding to transmission mode 2. As shown in FIG. 6, the method may include, but is not limited to, the following steps.

At step S601, a first beam of a first transmission layer is determined.

At step S602, codebook coefficients configured for constructing an 8-antenna port codebook are determined, in which, the codebook coefficients include first co-phase coefficients and an inter-panel compensation factor.

In an embodiment of the present disclosure, the first co-phase coefficients include 1 and $\varphi_n$.

For a detailed description of steps S601 to S602, reference can be made to relevant contents in the above embodiments, which will not be repeated here.

At step S603, in a case of inter-panel non coherence transmission and a count of antenna panels being 4, a first candidate codeword is determined by combining the first beam with the first co-phase coefficients.

In an embodiment of the present disclosure, the first beam is denoted as $v_{l,m}$, and the first beam $v_{l,m}$ may be combined with the first co-phase coefficients to obtain the first candidate codewords: $v_{l,m}$ and $\varphi_n v_{l,m}$.

At step S604, for the first transmission layer being transmitted on the first panel, the first candidate codeword is determined as the first codeword of the first transmission layer.

At step S605, the second codeword of a transmission layer corresponding to the $n_g$-th antenna panel is determined by multiplying the inter-panel compensation factor of the $n_g$-th antenna panel by the first codeword of the first transmission layer.

It should be noted that the four antenna panels correspond to different transmission layers. For example, the first transmission layer is transmitted on the first antenna panel, the second transmission layer is transmitted on the second antenna panel, and the third transmission layer is transmitted on the third antenna panel, and the fourth transmission layer is transmitted on the fourth antenna panel.

In a case of the count of antenna panels being 4, each antenna panel may obtain the codeword of each antenna panel using the same first beam and first co-phase coefficient, and introducing the inter-panel compensation factor of the antenna panel.

The inter-panel compensation factor of the second antenna panel is $\varphi_{p1}$, the inter-panel compensation factor of the third antenna panel is $\varphi_{p2}$, and the inter-panel compensation factor of the fourth antenna panel is $\varphi_{p3}$.

The inter-panel compensation factor of the second antenna panel, $\varphi_{p3}$, is multiplied by the first codeword of the first transmission layer to obtain the second codeword of a transmission layer corresponding to the second antenna panel, i.e., the second transmission layer, is $[\varphi_{p1} v_{l,m}\ \varphi_n \varphi_{p1} v_{l,m}]^T$.

The inter-panel compensation factor of the third antenna panel, $\varphi_{p2}$, is multiplied by the first codeword of the first transmission layer to obtain the second codeword of a transmission layer corresponding to the third antenna panel, i.e., the third transmission layer, is $[\varphi_{p2} v_{l,m}\ [\varphi_{p1} v_{l,m}]^T$.

The inter-panel compensation factor of the fourth antenna panel, $\varphi_{p3}$, is multiplied by the first codeword of the first transmission layer to obtain the second codeword of a transmission layer corresponding to the fourth antenna panel, i.e., the fourth transmission layer, is $[\varphi_{p3} v_{l,m}\ \varphi_n \varphi_{p3} v_{l,m}]^T$.

As an example, in the case of inter-panel non coherence transmission, when the count of antenna panels is 4 and the count of transmission layers is 4, the obtained uplink MIMO transmission 8-antenna port multi-antenna panel non coherence codeword is provided as:

$$W_{4,4}^N = \begin{bmatrix} v_{l,m} & 0 & 0 & 0 \\ \varphi_n v_{l,m} & 0 & 0 & 0 \\ 0 & \varphi_{p_1} v_{l,m} & 0 & 0 \\ 0 & \varphi_n \varphi_{p_1} v_{l,m} & 0 & 0 \\ 0 & 0 & \varphi_{p_2} v_{l,m} & 0 \\ 0 & 0 & \varphi_n \varphi_{p_2} v_{l,m} & 0 \\ 0 & 0 & 0 & \varphi_{p_3} v_{l,m} \\ 0 & 0 & 0 & \varphi_n \varphi_{p_3} v_{l,m} \end{bmatrix}.$$

In an embodiment of the present disclosure, the high-dimensional 8-antenna port multi-antenna panel codeword for non coherence transmission may be constructed based on the first beam of the first transmission layer and the codebook coefficients, which may satisfy that uplink MIMO supports 1-layer to 4-layer transmission requirements of the 8-antenna port multi-antenna panel and further enhance the uplink MIMO technology.

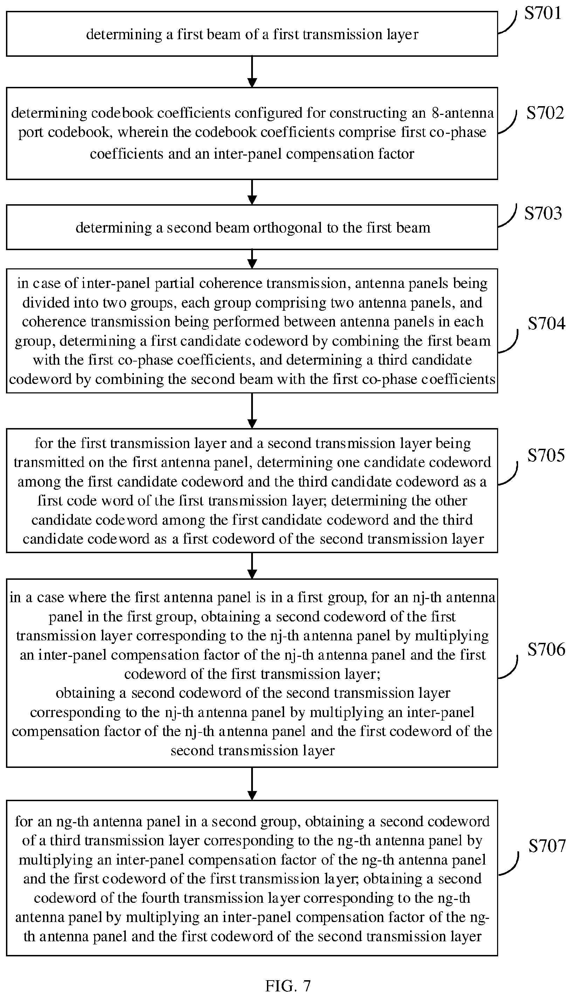

For transmission mode 3: partial coherence transmission between antenna panels, please refer to FIG. 7. FIG. 7 is a flowchart illustrating a method for determining an uplink MIMO transmission 8-antenna port multi-antenna panel codebook corresponding to transmission mode 3. As shown in FIG. 7, the method may include, but is not limited to, the following steps.

At step S701, a first beam of a first transmission layer is determined.

At step S702, codebook coefficients configured for constructing an 8-antenna port codebook are determined, in which, the codebook coefficients include first co-phase coefficients and an inter-panel compensation factor.

At step S703, a second beam orthogonal to the first beam is determined.

For a detailed description of steps S701 to S703, reference can be made to relevant contents in the above embodiments, which will not be repeated here.

In an embodiment of the present disclosure, an orthogonal second beam is selected for the first beam in the antenna panel, where the first beam is denoted as $v_{l,m}$, the second beam is denoted as $v_{l',m'}$, the first co-phase coefficients include 1 and $\varphi_n$, and the second co-phase coefficients include 1 and $-\varphi_n$.

At step S704, in case of inter-panel partial coherence transmission, antenna panels being divided into two groups, each group comprising two antenna panels, and coherence transmission being performed between antenna panels in each group, a first candidate codeword is determined by combining the first beam with the first co-phase coefficients, and a third candidate codeword is determined by combining the second beam with the first co-phase coefficients.

The first beam is combined with the first co-phase coefficients to obtain the first candidate codeword: $[v_{l,m} \ \varphi_n v_{l,m}]^T$.

The second beam is combined with the first co-phase coefficients to obtain the third candidate codeword: $[v_{l',m'} \ \varphi_n v_{l',m'}]^T$.

At step S705, for the first transmission layer and a second transmission layer being transmitted on the first antenna panel, one candidate codeword among the first candidate codeword and the third candidate codeword is determined as a first code word of the first transmission layer, and the other candidate codeword among the first candidate codeword and the third candidate codeword is determined as a first codeword of the second transmission layer.

Optionally, the first candidate codeword $[v_{l,m} \ \varphi_n v_{l,m}]^T$ is selected as the first codeword of the first transmission layer, and the third candidate codeword $[v_{l',m'} \ \varphi_n v_{l',m'}]^T$ is selected as the first codeword of the second transmission layer,

$$\begin{bmatrix} v_{l,m} & v_{l',m'} \\ \varphi_n v_{l,m} & \varphi_n v_{l',m'} \end{bmatrix}$$

that is, the first codeword for the first antenna panel is provided as: .

Optionally, the third candidate codeword $[v_{l',m'} \ \varphi_n v_{l',m'}]^T$ is selected as the first codeword of the first transmission layer, and the first candidate codeword $[v_{l,m} \ \varphi_n v_{l,m}]^T$ is selected as the first codeword of the second transmission layer, that

$$\begin{bmatrix} v_{l',m'} & v_{l,m} \\ \varphi_n v_{l',m'} & \varphi_n v_{l,m} \end{bmatrix}$$

is, the first codeword for the first antenna panel is provided as: .

At step S706, in a case where the first antenna panel is in a first group, for an $n_j$-th antenna panel in the first group, a second codeword of the first transmission layer corresponding to the $n_j$-th antenna panel is obtained by multiplying an inter-panel compensation factor of the $n_j$-th antenna panel and the first codeword of the first transmission layer, and a second codeword of the second transmission layer corresponding to the $n_j$-th antenna panel is obtained by multiplying an inter-panel compensation factor of the $n_j$-th antenna panel and the first codeword of the second transmission layer.

It should be noted that $2 \leq n_j \leq N_g$. In an embodiment of the present disclosure, the first antenna panel is in the first group, and the first group also includes the $n_j$-th antenna panel, for example, a third antenna panel. The antenna panels in the same group have the same number of transmission layers, that is, the first transmission layer and the second transmission layer are transmitted on the first antenna panel, and correspondingly, the first transmission layer and the second transmission layer may also be transmitted on the third antenna panel.

The inter-panel compensation factor of the $n_j$-th antenna panel is $\varphi_{p_{n_{j-1}}}$ .

Optionally, the first candidate codeword $[v_{l,m} \ \varphi_n v_{l,m}]^T$ is selected as the first codeword of the first transmission layer, then the second codeword of the first transmission layer corresponding to the $n_j$-th antenna panel is

$$\begin{bmatrix} \varphi_{p_{n_{j-1}}} v_{l,m} & \varphi_n \varphi_{p_{n_{j-1}}} v_{l,m} \end{bmatrix}^T$$

. The third candidate codeword $[v_{l',m'} \ \varphi_n v_{l',m'}]^T$ is selected as the first codeword of the second transmission layer, then the second codeword of the second transmission layer corresponding to the $n_j$-th

$$\begin{bmatrix} \varphi_{p_{n_{j-1}}} v_{l',m'} & \varphi_n \varphi_{p_{n_{j-1}}} v_{l',m'} \end{bmatrix}^T$$

antenna panel is . That is, the second codeword of the $n_j$-th antenna panel is

$$\begin{bmatrix} \varphi_{p_{n_{j-1}}} v_{l,m} & \varphi_{p_{n_{j-1}}} v_{l',m'} \\ \varphi_n \varphi_{p_{n_{j-1}}} v_{l,m} & \varphi_n \varphi_{p_{n_{j-1}}} v_{l',m'} \end{bmatrix}$$

provided as .

Optionally, the third candidate codeword $[v_{l',m'} \ \varphi_n v_{l',m'}]^T$ is selected as the first codeword of the first transmission layer, and the second codeword of the first transmission layer corresponding to the $n_j$-th antenna panel is

$$\left[ \varphi_{p_{n_{j-1}}} v_{l',m'} \quad \varphi_n \varphi_{p_{n_{j-1}}} v_{l',m'} \right]^T$$

. The first candidate codeword $[v_{l,m} \ \varphi_n v_{l,m}]^T$ is selected as the first codeword of the second transmission layer, and the second codeword of the second transmission layer corresponding to the $n_j$-th

antenna panel is $\left[ \varphi_{p_{n_{j-1}}} v_{l,m} \quad \varphi_n \varphi_{p_{n_{j-1}}} v_{l,m} \right]^T$. That is, the second codeword of the $n_j$-th antenna panel is provided

as $$\begin{bmatrix} \varphi_{p_{n_{j-1}}} v_{l',m'} & \varphi_{p_{n_{j-1}}} v_{l,m} \\ \varphi_n \varphi_{p_{n_{j-1}}} v_{l',m'} & \varphi_n \varphi_{p_{n_{j-1}}} v_{l,m} \end{bmatrix}.$$

At step S707, for an $n_g$-th antenna panel in a second group, a second codeword of a third transmission layer corresponding to the $n_g$-th antenna panel is obtained by multiplying an inter-panel compensation factor of the $n_g$-th antenna panel and the first codeword of the first transmission layer, a second codeword of the fourth transmission layer corresponding to the $n_g$-th antenna panel is obtained by multiplying an inter-panel compensation factor of the $n_g$-th antenna panel and the first codeword of the second transmission layer.

The inter-panel compensation factor of the $n_g$-th antenna panel is $\varphi_{p_{ng-1}}$.

Optionally, the first candidate codeword $[v_{l,m} \ \varphi_n v_{l,m}]^T$ is selected as the first codeword of the first transmission layer, then the second codeword of the third transmission layer corresponding to the $n_g$-th antenna panel is $[\varphi_{p_{ng-1}} v_{l,m} \ \varphi_n \varphi_{p_{ng-1}} v_{l,m}]^T$, and the third candidate codeword $[v_{l',m'} \ \varphi_n v_{l',m'}]^T$ is selected as the first codeword of the second transmission layer, then the second codeword of the fourth transmission layer corresponding to the $n_g$-th antenna panel is $[\varphi_{p_{ng-1}} v_{l',m'} \ \varphi_n \varphi_{p_{ng-1}} v_{l',m'}]^T$. That is, the second codeword of the $n_g$-th antenna panel is provided as

$$\begin{bmatrix} \varphi_{p_{ng-1}} v_{l,m} & \varphi_{p_{ng-1}} v_{l',m'} \\ \varphi_n \varphi_{p_{ng-1}} v_{l,m} & \varphi_n \varphi_{p_{ng-1}} v_{l',m'} \end{bmatrix}.$$

Optionally, the third candidate codeword $[v_{l',m'} \ \varphi_n v_{l',m'}]^T$ is selected as the first codeword of the first transmission layer, then the second codeword of the third transmission layer corresponding to the $n_g$-th antenna panel is $[\varphi_{p_{ng-1}} \ v_{l',m'} \ \varphi_n \varphi_{p_{ng-1}} \ v_{l',m'}]^T$, and the first candidate codeword $[v_{l,m} \ \varphi_n v_{l,m}]^T$ is selected as the first codeword of the second transmission layer, then the second codeword of the fourth transmission layer corresponding to the $n_g$-th antenna panel is $[\varphi_{p_{ng-1}} v_{l,m} \ \varphi_n \varphi_{p_{ng-1}} v_{l,m} \ ]^T$. That is, the second codeword of the $n_g$-th antenna panel is provided as

$$\begin{bmatrix} \varphi_{p_{ng-1}} v_{l',m'} & \varphi_{p_{ng-1}} v_{l,m} \\ \varphi_n \varphi_{p_{ng-1}} v_{l',m'} & \varphi_n \varphi_{p_{ng-1}} v_{l,m} \end{bmatrix}.$$

As an example, in the case of inter-panel partial coherence transmission and the count of antenna panels being 4, there are coherence transmission between two antenna panels and coherent transmission between the other two antenna panels, that is, the antenna panels are divided into two groups. For example, in the first group, the first antenna panel and the third antenna panel are coherent, and the third antenna panel is the $n_j$-th antenna panel. In the second group, the second antenna panel and the fourth antenna panel are coherent, and the second antenna panel and the fourth antenna panel are the $n_g$-th antenna panel in the second group.

When the count of antenna panels is 4 and the count of transmission layers is 4, the uplink MIMO transmission 8-antenna port multi-antenna panel partial coherence codeword is provided as:

$$W_{4,4}^{P} = \begin{bmatrix} v_{l,m} & v_{l',m'} & 0 & 0 \\ \varphi_n v_{l,m} & \varphi_n v_{l',m'} & 0 & 0 \\ 0 & 0 & \varphi_{p_1} v_{l,m} & \varphi_{p_1} v_{l',m'} \\ 0 & 0 & \varphi_n \varphi_{p_1} v_{l,m} & \varphi_n \varphi_{p_1} v_{l',m'} \\ \varphi_{p_2} v_{l,m} & \varphi_{p_2} v_{l',m'} & 0 & 0 \\ \varphi_n \varphi_{p_2} v_{l,m} & \varphi_n \varphi_{p_2} v_{l',m'} & 0 & 0 \\ 0 & 0 & \varphi_{p_3} v_{l,m} & \varphi_{p_3} v_{l',m'} \\ 0 & 0 & \varphi_n \varphi_{p_3} v_{l,m} & \varphi_n \varphi_{p_3} v_{l',m'} \end{bmatrix}$$

or

$$W_{4,4}^{P} = \begin{bmatrix} v_{l',m'} & v_{l,m} & 0 & 0 \\ \varphi_n v_{l',m'} & \varphi_n v_{l,m} & 0 & 0 \\ 0 & 0 & \varphi_{p_1} v_{l',m'} & \varphi_{p_1} v_{l,m} \\ 0 & 0 & \varphi_n \varphi_{p_1} v_{l',m'} & \varphi_n \varphi_{p_1} v_{l,m} \\ \varphi_{p_2} v_{l',m'} & \varphi_{p_2} v_{l,m} & 0 & 0 \\ \varphi_n \varphi_{p_2} v_{l',m'} & \varphi_n \varphi_{p_2} v_{l,m} & 0 & 0 \\ 0 & 0 & \varphi_{p_3} v_{l',m'} & \varphi_{p_3} v_{l,m} \\ 0 & 0 & \varphi_n \varphi_{p_3} v_{l',m'} & \varphi_n \varphi_{p_3} v_{l,m} \end{bmatrix} .$$

In an embodiment of the present disclosure, the high-dimensional 8-antenna port multi-antenna panel codeword for partial coherence transmission may be constructed based on the first beam of the first transmission layer and the codebook coefficients, which may satisfy that uplink MIMO supports 1-layer to 4-layer transmission requirements of the 8-antenna port multi-antenna panel and further enhance the uplink MIMO technology.

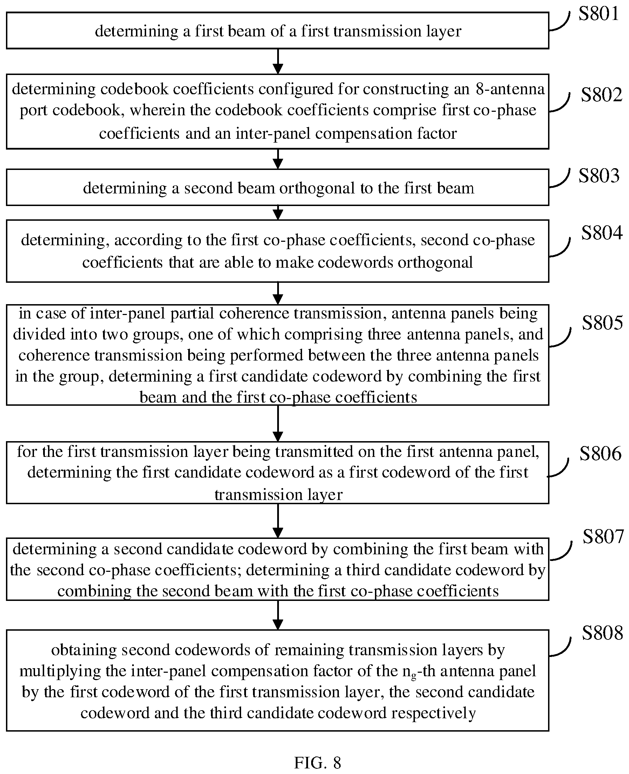

For transmission mode 3: partial coherence transmission between antenna panels, please refer to FIG. 8. FIG. 8 is a flowchart illustrating a method for determining an uplink MIMO transmission 8-antenna port multi-antenna panel codebook corresponding to transmission mode 3. As shown in FIG. 8, the method may include, but is not limited to, the following steps.

At step S801, a first beam of a first transmission layer is determined.

At step S802, codebook coefficients configured for constructing an 8-antenna port codebook are determined, in which, the codebook coefficients include first co-phase coefficients and an inter-panel compensation factor.

At step S803, a second beam orthogonal to the first beam is determined.

In an embodiment of the present disclosure, an orthogonal second beam is selected for the first beam, where the first beam is denoted as $v_{l,m}$, the second beam is denoted as $v_{l',m'}$.

At step S804, second co-phase coefficients that are able to make codewords orthogonal is determined according to the first co-phase coefficients.

In an embodiment of the present disclosure, the first co-phase coefficients include 1 and $\varphi_n$. The second co-phase coefficients that are able to make codewords orthogonal are 1 and $-\varphi_n$.

For a detailed description of steps S801 to S804, reference can be made to relevant contents in the above embodiments, which will not be repeated here.

At step S805, in case of inter-panel partial coherence transmission, antenna panels being divided into two groups, one of which comprising three antenna panels, and coherence transmission being performed between the three antenna panels in the group, a first candidate codeword is determined by combining the first beam and the first co-phase coefficients.

The first beam may be combined with the first co-phase coefficients to obtain the first candidate codeword $[v_{l,m} \ \varphi_n v_{l,m}]^T$.

At step S806, for the first transmission layer being transmitted on the first antenna panel, the first candidate codeword is determined as a first codeword of the first transmission layer.

At step S807, a second candidate codeword is determined by combining the first beam with the second co-phase coefficients, and a third candidate codeword is determined by combining the second beam with the first co-phase coefficients.

The first beam may be combined with the first co-phase coefficient to obtain the second candidate codeword as $[v_{l,m} \ -\varphi_n v_{l,m}]^T$.

The second beam may be combined with the first co-phase coefficient to obtain the third candidate codeword as $[v_{l',m'} \ \varphi_n v_{l',m}]^T$.

At step S808, second codewords of remaining transmission layers are obtained by multiplying the inter-panel compensation factor of the $n_g$-th antenna panel by the first codeword of the first transmission layer, the second candidate codeword and the third candidate codeword respectively.

The inter-panel compensation factor of the $n_g$-th antenna panel may be $\varphi_{p_{ng-1}}$, that is, the inter-panel compensation factor of the second antenna panel is $\varphi_{p_1}$, the inter-panel compensation factor of the third antenna panel is $\varphi_{p_2}$, and the inter-panel compensation factor of the fourth antenna panel is $\varphi_{p_3}$.

The inter-panel compensation factor of the second antenna panel, $\varphi_{p_1}$, is multiplied by the first codeword of the first transmission layer to obtain the second codeword of a transmission layer corresponding to the second antenna panel, i.e., the second transmission layer, is $[\varphi_{p1} v_{l,m} \ \varphi_n \varphi_{p1} v_{l,m}]^T$.

The inter-panel compensation factor of the third antenna panel, $\varphi_{p_2}$, is multiplied by the second candidate codeword to obtain the second codeword of a transmission layer corresponding to the third antenna panel, i.e., the third transmission layer, is $[\varphi_{p2} v_{l,m} \ -\varphi_n \varphi_{p2} v_{l,m}]^T$.

The inter-panel compensation factor of the fourth antenna panel, $\varphi_{p_3}$, is multiplied by the third candidate codeword to obtain the second codeword of a transmission layer corresponding to the fourth antenna panel, i.e., the fourth transmission layer, is $[\varphi_{p3} v_{l',m'} \ \varphi_n \varphi_{p3} v_{l',m}]^T$.

Optionally, the inter-panel compensation factor of the second antenna panel, $\varphi_{p_1}$, may also be multiplied by the second candidate codeword or the third candidate codeword, to obtain the second codeword of the transmission layer corresponding to the second antenna panel, such as the third transmission layer. The inter-panel compensation factor of the third antenna panel may, $\varphi_{p_2}$, also be multiplied by the first codeword or the third candidate codeword to obtain the second codeword of the transmission layer corresponding to the third antenna panel, such as the third transmission layer. The inter-panel compensation factor of the fourth antenna panel, $\varphi_{p_3}$, may also be multiplied by the first codeword or the second candidate codeword to obtain the second codeword of the transmission layer corresponding to the fourth antenna panel, such as the fourth transmission layer. It should be noted that the inter-panel compensation factors of the two antenna panels need to be multiplied by different codewords.

Optionally, the second transmission layer and the fourth transmission layer may select co-phase coefficients orthogonal to each other, and the third transmission layer may select second beams orthogonal to each other; or, the second transmission layer and the fourth transmission layer may select beams orthogonal to each other, and the third transmission layer may select co-phase coefficients orthogonal to each other.

As an example, in the case of inter-panel partial coherence transmission and the count of antenna panels is 4, one antenna panel has coherent transmission, and the other three antenna panels have coherent transmission, for example, the first antenna panel is coherent, while the second antenna, the third antenna and the fourth antenna panels are coherent.

When the count of antenna panels is 4 and the count of transmission layers is 4, the uplink MIMO transmission 8-antenna port multi-antenna panel partial coherence codeword is provided as:

$$
W_{4,4}^P = \begin{bmatrix}
v_{l,m} & 0 & 0 & 0 \\
\varphi_n v_{l,m} & 0 & 0 & 0 \\
0 & \varphi_{p_1} v_{l,m} & \varphi_{p_1} v_{l',m'} & \varphi_{p_1} v_{l,m} \\
0 & \varphi_n \varphi_{p_1} v_{l,m} & \varphi_n \varphi_{p_1} v_{l',m'} & -\varphi_n \varphi_{p_1} v_{l,m} \\
0 & \varphi_{p_1} v_{l,m} & \varphi_{p_1} v_{l',m'} & \varphi_{p_1} v_{l,m} \\
0 & \varphi_n \varphi_{p_1} v_{l,m} & \varphi_n \varphi_{p_1} v_{l',m'} & -\varphi_n \varphi_{p_1} v_{l,m} \\
0 & \varphi_{p_3} v_{l,m} & \varphi_{p_1} v_{l',m'} & \varphi_{p_1} v_{l,m} \\
0 & \varphi_n \varphi_{p_3} v_{l,m} & \varphi_{p_1} v_{l',m'} & -\varphi_n \varphi_{p_1} v_{l,m}
\end{bmatrix}
$$

or

$$W_{4,4}^P = \begin{bmatrix} v_{l,m} & 0 & 0 & 0 \\ \varphi_n v_{l,m} & 0 & 0 & 0 \\ 0 & \varphi_{p_1} v_{l',m'} & \varphi_{p_1} v_{l,m} & \varphi_{p_1} v_{l,m} \\ 0 & \varphi_n \varphi_{p_1} v_{l',m'} & \varphi_n \varphi_{p_1} v_{l,m} & -\varphi_n \varphi_{p_1} v_{l,m} \\ 0 & \varphi_{p_1} v_{l',m'} & \varphi_{p_1} v_{l,m} & \varphi_{p_1} v_{l,m} \\ 0 & \varphi_n \varphi_{p_1} v_{l',m'} & \varphi_n \varphi_{p_1} v_{l,m} & -\varphi_n \varphi_{p_1} v_{l,m} \\ 0 & \varphi_{p_1} v_{l',m'} & \varphi_{p_3} v_{l,m} & \varphi_{p_1} v_{l,m} \\ 0 & \varphi_{p_1} v_{l',m'} & \varphi_n \varphi_{p_3} v_{l,m} & -\varphi_n \varphi_{p_1} v_{l,m} \end{bmatrix}.$$

In an embodiment of the present disclosure, the high-dimensional 8-antenna port multi-antenna panel codeword for partial coherence transmission may be constructed based on the first beam of the first transmission layer and the codebook coefficients, which may satisfy that uplink MIMO supports 1-layer to 4-layer transmission requirements of the 8-antenna port multi-antenna panel and further enhance the uplink MIMO technology.

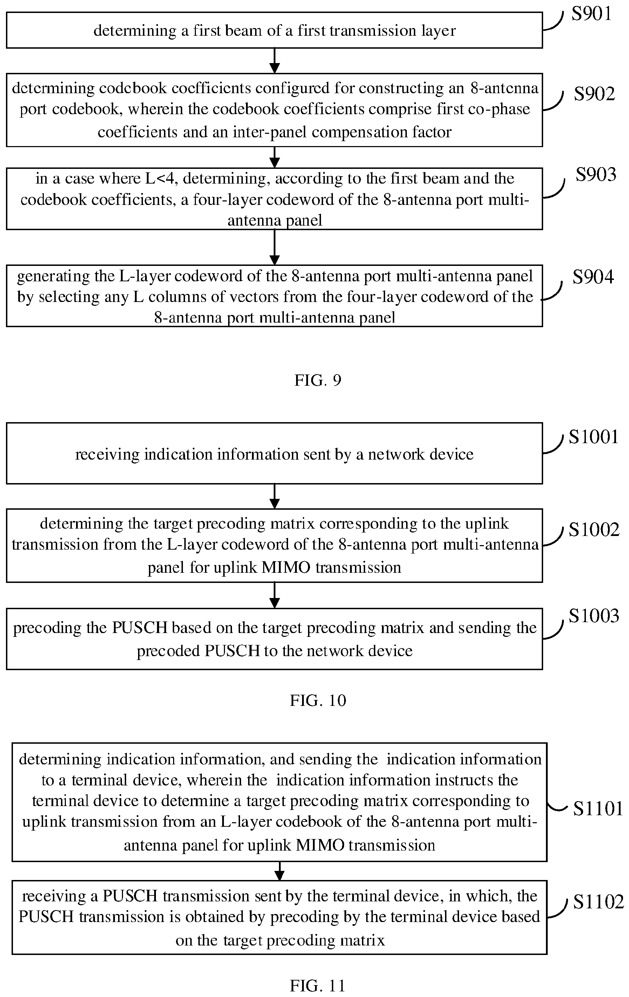

FIG. 9 is a flowchart illustrating a method for determining an uplink MIMO transmission 8-antenna port multi-antenna panel codebook provided in an embodiment of the present disclosure. As shown in FIG. 9, the method may include, but is not limited to, the following steps.

At step S901, a first beam of a first transmission layer is determined.

At step S902, codebook coefficients configured for constructing an 8-antenna port codebook are determined, in which, the codebook coefficients include first co-phase coefficients and an inter-panel compensation factor.

For a detailed description of steps S901 to S902, reference can be made to relevant contents in the above embodiments, which will not be repeated here.

At step S903, in a case where L<4, a four-layer codeword of the 8-antenna port multi-antenna panel is determined according to the first beam and the codebook coefficients.

Optionally, a first codeword of the L-layer codeword of the 8-antenna port multi-antenna panel for a first antenna panel is determined according to the first beam and the first co-phase coefficients. For an $n_g$-th antenna panel, determining an inter-panel compensation factor of the $n_g$-th antenna panel, where $2 \leq n_g \leq N_g$, $N_g$ is a count of antenna panels. Further, a second codeword of the four-layer codeword of the 8-antenna port multi-antenna panel for the $n_g$-th antenna panel is determined according to the inter-panel compensation factor of the $n_g$-th antenna panel and the first codeword.

Regarding the determination process of the first codeword of the L-layer codeword of the 8-antenna port multi-antenna panel for the first antenna panel and the second codeword of the four-layer codeword of the 8-antenna port multi-antenna panel for the $n_g$-th antenna panel, reference can be made on to relevant content in the above embodiments, which will not be described again here.

At step S904, the L-layer codeword of the 8-antenna port multi-antenna panel is generated by selecting any L columns of vectors from the four-layer codeword of the 8-antenna port multi-antenna panel.

Optionally, in a case of L=3, any three columns of vectors may be selected from the four-layer codeword of the 8-antenna port multi-antenna panel, for example, the first three columns or the last three columns may be selected.

Optionally, in a case of L=2, any two columns of vectors may be selected from the four-layer codeword of the 8-antenna port multi-antenna panel. The transmission layer corresponding to the selected two columns of vectors needs to cover each antenna panel. For example, the first antenna panel and the third antenna panel are coherent, and the second antenna panel and the fourth antenna panel are coherent. The first transmission layer and the second transmission layer may be transmitted on the first antenna panel and the third antenna panel, and the third transmission layer and the fourth transmission layer may be transmitted on the second antenna panel and the fourth antenna panel. When selecting two columns of vectors, it is required to select one column of vector from column vectors corresponding to the first transmission layer and the second transmission layer, and select one column of vector from column vectors corresponding to the third transmission layer and the fourth transmission layer.

In some implementations, a transmission layer set corresponding to each of the antenna panels is determined, in which, the transmission layer set includes at least one transmission layer, and each transmission layer corresponds to one column of vector, and the L columns of vectors are obtained by selecting at least one column of vector from each transmission layer set.

For example, the first antenna panel and the third antenna panel are coherent, and the second antenna panel and the fourth antenna panel are coherent. The first antenna panel and the third antenna panel both correspond to a transmission layer set 1, and the transmission layer set 1 includes a first transmission layer and a second transmission layer. The second antenna panel and the fourth antenna panel both correspond to a transmission layer set 2, and the transmission layer set 2 includes a third transmission layer and a fourth transmission layer. One column of vector is selected from the transmission layer set 1, which may be, for example, a column vector corresponding to the second transmission layer. One column of vector is selected from the transmission layer set 2, which may be, for example, a column vector corresponding to the third transmission layer.

In an embodiment of the present disclosure, the high-dimensional 8-antenna port multi-antenna panel codeword may be constructed based on the first beam of the first transmission layer and the codebook coefficients, which may satisfy that uplink MIMO supports 1-layer to 4-layer transmission requirements of the 8-antenna port multi-antenna panel and further enhance the uplink MIMO technology.

It should be noted that the above codewords are all codewords in a case of energy non-normalization. A final codeword is required to multiply by an energy normalization coefficient. A possible normalization coefficient is a reciprocal of a number of non-zero elements under a square root.

It should be noted that, for the inter-panel partial coherence codeword, when there are coherence relationships between different panels, the codeword is required to be designed according to actual panel coherence.

It should be noted that the above embodiments may be executed independently or in any combination. And the above embodiments may be executed by a network side device (e.g., a base station). In an implementation, the above embodiments are executed by a network side device (e.g., a base station), and the network side device (e.g., a base station) may send the finally determined second codeword to a UE.

In some possible implementations, the above embodiments may also be executed by a user equipment (UE). Further, the UE sends the finally determined second codeword to the network side device (e.g., the base station).

In other possible implementations, the above embodiments may also be executed by the network side equipment (such as a base station) and the user equipment UE, respectively.

The method for determining the antenna fully coherence transmission codeword provided by the above embodiments may be applied to a terminal device and a network device, and after determining the first codeword for the antenna fully coherent transmission, a precoding codebook may be determined based on the first codeword. The terminal device and the network device may perform PUSCH transmission based on the precoding codebook.

In some possible implementations, the codeword may refer to a precoding matrix, and the codebook may be a collection of a plurality of codewords/precoding matrices.

The process of codebook-based uplink transmission (such as PUSCH transmission) is explained below.

Please refer to FIG. 10, FIG. 10 is a flowchart illustrating a codebook-based uplink transmission method according to an embodiment of the present disclosure. The method may be executed by a terminal device, and may include, but is not limited to, the following steps.

At step S1001, indication information sent by a network device is received.

Optionally, the indication information may be a transmit precoding matrix indicator (TPMI), which indicates a target precoding matrix in an L-layer codeword of the 8-antenna port multi-antenna panel. During the process of codebook-based PUSCH transmission, the network device may send the TPMI to the terminal device. Correspondingly, the terminal device may receive the TPMI sent by the network device and determine the target precoding matrix for encoding from the L-layer codeword of the 8-antenna port multi-antenna panel based on the TPMI.

Optionally, the indication information may adopt index indications similar to downlink type I (DL Type I) such as index indications $i_1$ and $i_2$. The index indications $i_1$ and $i_2$ may include multiple indices to indicate different quantities, the index indication $i_1$ corresponds to a beam and an inter-panel compensation factor, and the index indication $i_2$ corresponds to the co-phase coefficient.

Regarding the process of determining the L-layer codeword of the 8-antenna port multi-antenna panel, reference can be made to relevant content in the above embodiments, which will not be described again here.

At step S1002, the target precoding matrix corresponding to the uplink transmission is determined from the L-layer codeword of the 8-antenna port multi-antenna panel for uplink MIMO transmission.

Optionally, the terminal device may determine the target precoding matrix corresponding to the uplink transmission from a precoding L-layer codebook of the 8-antenna port multi-antenna panel corresponding to the uplink MIMO transmission based on the TPMI. The terminal device may determine the target precoding matrix from the precoding codebook based on the TPMI. Optionally, a mapping relationship between a precoding matrix and an index may be predetermined, and the target precoding matrix for the uplink transmission may be determined from the precoding codebook according to the index.

Optionally, the terminal device may receive the index indications $i_1$ and $i_2$ sent by the network device, and determine the beam and the inter-panel compensation factor indicated according to the index indication $i_1$, determine the co-phase coefficient according to the index indication $i_2$, and then obtain the target precoding matrix for encoding in the L-layer codebook of the 8-antenna port multi-antenna panel based on the indicated beam, the indicated inter-panel compensation factor and the indicated co-phase coefficient.

At step S1003, the PUSCH is precoded based on the target precoding matrix and the precoded PUSCH is sent to the network device.

After obtaining the target precoding matrix, the PUSCH may be precoded based on the target precoding matrix, and the precoded PUSCH may be sent to the network device.

In an embodiment of the present disclosure, the TPMI sent by the network device is received, and the target precoding matrix corresponding to the uplink transmission is determined based on the TPMI from the L-layer codebook of the 8-antenna port multi-antenna panel corresponding to the uplink MIMO transmission, and the PUSCH is precoded based on the target precoding matrix and the precoded PUSCH is sent to the network device. In the present disclosure, the high-dimensional 8-antenna port multi-antenna panel transmission codeword may be constructed based on the first beam of the first transmission layer and the codebook coefficients, which may satisfy that the uplink MIMO supports 1-layer to 4-layer transmission requirements of the 8-antenna port multi-antenna panel and further enhance the uplink MIMO technology.

In some possible implementations, a certain layer of transmission may refer to transmission of data of this layer.

Please refer to FIG. 11, FIG. 11 is a flowchart illustrating a codebook-based uplink transmission method according to an embodiment of the present disclosure. The method may be executed by a network device, and may include, but is not limited to, the following steps.

At step S1101, indication information is determined and sent to a terminal device to instruct the terminal device to determine a target precoding matrix corresponding to uplink transmission from an L-layer codebook of the 8-antenna port multi-antenna panel for uplink MIMO transmission.

Optionally, the network device may receive a sounding reference signal (SRS) sent by the terminal device, perform channel estimation based on the SRS, determine a TPMI based on an estimated channel condition, and send the TPMI to the terminal device. The TPMI is used to indicate a precoding matrix in the precoding codebook, and may be an index of the precoding matrix.

Optionally, the network device may send index indications $i_1$ and $i_2$ to the terminal device, and the index indication $i_1$ corresponds to the beam and the inter-panel compensation factor, and the index indication $i_2$ corresponds to the co-phase coefficient. Correspondingly, the terminal device may receive the index indications $i_1$ and $i_2$ sent by the network device, determine the beam and the inter-panel compensation factor indicated according to the index indication $i_1$, determine the co-phase coefficient according to the index indication $i_2$, and then obtain the target precoding matrix for encoding in the L-layer codebook of the 8-antenna port multi-antenna panel according to the indicated beam, the indicated inter-panel compensation factor, and the indicated co-phase coefficient.

Regarding the process of determining the L-layer codebook of the 8-antenna port multi-antenna panel, reference may be made to relevant contents in the above embodiments, which will not be repeated here.

At step S1102, a PUSCH transmission sent by the terminal device is received, in which, the PUSCH transmission is obtained by precoding by the terminal device based on the target precoding matrix.

After receiving the TPMI, the terminal device may obtain the target precoding matrix determined for uplink transmission, precode the PUSCH based on the target precoding matrix, and send the precoded PUSCH to the network device. Accordingly, the network device may receive the PUSCH transmission sent by the terminal device.

In an embodiment of the present disclosure, precoding matrix indication information is determined and the precoding matrix indication information is sent to the terminal device to instruct the terminal device to determine the target precoding matrix corresponding to uplink transmission from the L-layer codebook of the 8-antenna port multi-antenna panel corresponding to the uplink MIMO transmission. The PUSCH transmission sent by the terminal device is received, and the PUSCH transmission is obtained by precoding by the terminal device based on the target precoding matrix. In the present disclosure, the high-dimensional 8-antenna port multi-antenna panel transmission codeword may be constructed based on the first beam of the first transmission layer and the codebook coefficients, which may satisfy that the uplink MIMO supports 1-layer to 4-layer transmission requirements of the 8-antenna port multi-antenna panel and further enhance the uplink MIMO technology.

In the above embodiments of the disclosure, the methods according to the embodiments of the disclosure are described from the perspectives of the network device and the terminal device, respectively. In order to realize each of functions in the methods according to the above embodiments of the disclosure, the network device and the first terminal device may include a hardware structure, a software module, and realize each of the above functions in the form of hardware structure, software module, or a combination of hardware structure and software module. A certain function of the above functions may be performed in the form of hardware structure, software module, or a combination of hardware structure and software module.

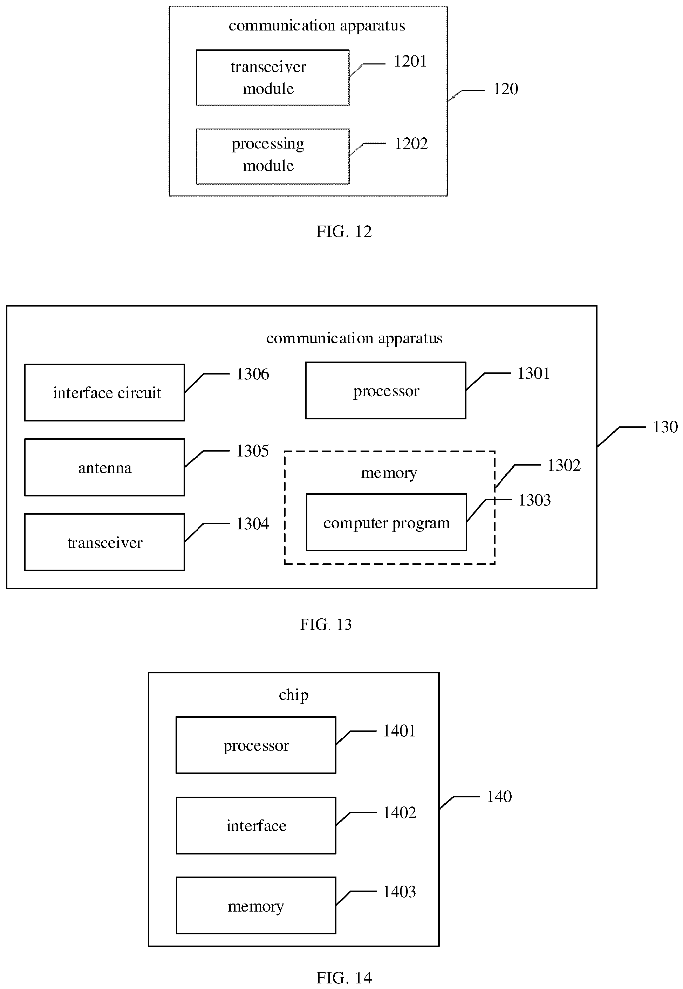

As illustrated in FIG. 12, FIG. 12 is a schematic diagram illustrating a communication device 120 according to an embodiment of the disclosure. The communication device 120 illustrated in FIG. 12 may include a transceiver module 1201 and a processing module 1202. The transceiver module 1201 may include a transmitting module and/or a receiving module. The transmitting module is configured to perform a transmitting function, and the receiving module is configured to perform a receiving function, and the transceiver module 1201 may perform the transmitting function and/or the receiving function.

The communication device 120 may be a terminal device, an apparatus in the terminal device, or an apparatus that can be used together with the terminal device. Alternatively, the communication device 120 may be a network device, an apparatus in the network side device, or an apparatus that can be used together with the network device.

The processing module 1202 is configured to:

determine a first beam of a first transmission layer;
determine codebook coefficients configured for constructing an 8-antenna port codebook, in which, the codebook coefficients include first co-phase coefficients and an inter-panel compensation factor;
determine, according to the first beam and the codebook coefficients, an L-layer codeword of the 8-antenna port multi-antenna panel, where L is a positive integer greater than or equal to 1 and less than or equal to 4.

Optionally, the processing module 1202 is further configured to:

determine a first codeword of the L-layer codeword of the 8-antenna port multi-antenna panel for a first antenna panel according to the first beam and the first co-phase coefficients;
for an ng-th antenna panel, determine an inter-panel compensation factor of the $n_g$-th antenna panel, where $2 \leq n_g \leq N_g$, $N_g$ is a count of antenna panels;
determine a second codeword of the L-layer codeword of the 8-antenna port multi-antenna panel for the $n_g$-th antenna panel according to the inter-panel compensation factor of the $n_g$-th antenna panel and the first codeword.

Optionally, the processing module 1202 is further configured to:

determine a second beam orthogonal to the first beam;
determine, according to the first co-phase coefficients, second co-phase coefficients that are able to make codewords orthogonal;
determine the first codeword for the first antenna panel according to at least part of parameters of the first beam and the second beam, the first co-phase coefficients and the second co-phase coefficients.

Optionally, the processing module 1202 is further configured to:

in a case of inter-panel fully coherence transmission, determine a first candidate codeword and a second candidate codeword by combining the first beam with the first co-phase coefficients and the second co-phase coefficients respectively;
determine a third candidate codeword and a fourth candidate codeword by combining the second beam with the first co-phase coefficients and the second co-phase coefficients respectively;
determine a first codeword of each transmission layer according to orthogonality of the first candidate codeword, the second candidate codeword, the third candidate codeword and the fourth candidate codeword.

Optionally, the processing module 1202 is further configured to:

in a case of inter-panel non coherence transmission and a count of antenna panels being 2, determine a first candidate codeword by combining the first beam with the first co-phase coefficients;
determine a third candidate codeword by combining the second beam with the first co-phase coefficients;
for the first transmission layer and a second transmission layer being transmitted on the first antenna panel, determine one candidate codeword of the first candidate codeword and the third candidate codeword as a first codeword of the first transmission layer;
determine the other candidate codeword of the first candidate codeword and the third candidate codeword as a first codeword of the second transmission layer.

Optionally, the processing module 1202 is further configured to:

in a case of inter-panel non coherence transmission and a count of antenna panels being 2, determine a first candidate codeword by combining the first beam with the first co-phase coefficients;
determine a second candidate codeword by combining the first beam with the second co-phase coefficients;
for the first transmission layer and a second transmission layer being transmitted on the first antenna panel, determine one candidate codeword among the first candidate codeword and the second candidate codeword as a first codeword of the first transmission layer;
determine the other candidate codeword among the first candidate codeword and the second candidate codeword as a first codeword of the second transmission layer.

Optionally, the processing module 1202 is further configured to:

for a third transmission layer and a fourth transmission layer being transmitted on a second antenna panel, determine a second codeword of the third transmission layer corresponding to the second antenna panel by multiplying the inter-panel compensation factor of the second antenna panel by the first codeword of the first transmission layer; determine a second of the fourth transmission layer corresponding to the second antenna panel by multiplying the inter-panel compensation factor of the second antenna panel by the first codeword of the second transmission layer.

Optionally, the processing module 1202 is further configured to:

in a case of inter-panel non coherence transmission and a count of antenna panels being 4, determine a first candidate codeword by combining the first beam with the first co-phase coefficients; for the first transmission layer being transmitted on the first panel, determine the first candidate codeword as the first codeword of the first transmission layer.

Optionally, the processing module 1202 is further configured to:
determine the second codeword of a transmission layer corresponding to the ng-th antenna panel by multiplying the inter-panel compensation factor of the ng-th antenna panel by the first codeword of the first transmission layer.
Optionally, the processing module 1202 is further configured to:

in case of inter-panel partial coherence transmission, antenna panels being divided into two groups, each group comprising two antenna panels, and coherence transmission being performed between antenna panels in each group, determine a first candidate codeword by combining the first beam with the first co-phase coefficients, and determining a third candidate codeword by combining the second beam with the first co-phase coefficients; for the first transmission layer and a second transmission layer being transmitted on the first antenna panel, determine one candidate codeword among the first candidate codeword and the third candidate codeword as a first code word of the first transmission layer; determine the other candidate codeword among the first candidate codeword and the third candidate codeword as a first codeword of the second transmission layer.

Optionally, the processing module 1202 is further configured to:

in case of inter-panel partial coherence transmission, antenna panels being divided into two groups, each group comprising two antenna panels, and coherence transmission being performed between antenna panels in each group, determine a first candidate codeword by combining the first beam with the first co-phase coefficients, and determining a second candidate codeword by combining the first beam with the second co-phase coefficients; for the first transmission layer and a second transmission layer being transmitted on the first antenna panel, determine one candidate codeword among the first candidate codeword and the second candidate codeword as a first code word of the first transmission layer; determine the other candidate codeword among the first candidate codeword and the second candidate codeword as a first codeword of the second transmission layer.

Optionally, the processing module 1202 is further configured to:

in a case where the first antenna panel is in a first group, for an nj-th antenna panel in the first group, obtain a second codeword of the first transmission layer corresponding to the nj-th antenna panel by multiplying an inter-panel compensation factor of the nj-th antenna panel and the first codeword of the first transmission layer; obtain a second codeword of the second transmission layer corresponding to the nj-th antenna panel by multiplying an inter-panel compensation factor of the nj-th antenna panel and the first codeword of the second transmission layer, where $2 \leq nj \leq Ng$.

Optionally, the processing module 1202 is further configured to:

for an ng-th antenna panel in a second group, obtain a second codeword of a third transmission layer corresponding to the ng-th antenna panel by multiplying an inter-panel compensation factor of the ng-th antenna panel and the first codeword of the first transmission layer;

obtain a second codeword of the fourth transmission layer corresponding to the ng-th antenna panel by multiplying an inter-panel compensation factor of the ng-th antenna panel and the first codeword of the second transmission layer.

Optionally, the processing module 1202 is further configured to:

in case of inter-panel partial coherence transmission, antenna panels being divided into two groups, one of which comprising three antenna panels, and coherence transmission being performed between the three antenna panels in the group,
determine a first candidate codeword by combining the first beam and the first co-phase coefficients;
for the first transmission layer being transmitted on the first antenna panel, determine the first candidate codeword as a first codeword of the first transmission layer.

Optionally, the processing module 1202 is further configured to:

determine a second candidate codeword by combining the first beam with the second co-phase coefficients;
determine a third candidate codeword by combining the second beam with the first co-phase coefficients;
obtain second codewords of remaining transmission layers by multiplying the inter-panel compensation factor of the ng-th antenna panel by the first codeword of the first transmission layer, the second candidate codeword and the third candidate codeword respectively.

Optionally, the processing module 1202 is further configured to:

in a case where L<4, determine, according to the first beam and the codebook coefficients, a four-layer codeword of the 8-antenna port multi-antenna panel;
generate the L-layer codeword of the 8-antenna port multi-antenna panel by selecting any L columns of vectors from the four-layer codeword of the 8-antenna port multi-antenna panel.

Optionally, the processing module 1202 is further configured to:

determine a transmission layer set corresponding to each of the antenna panels, wherein the transmission layer set comprises at least one transmission layer, and each transmission layer corresponds to one column of vector;
obtain the L columns of vectors by selecting at least one column of vector from each transmission layer set.

Optionally, the processing module 1202 is further configured to:
determine a normalization coefficient of any codeword, and performing energy normalization processing on the any codeword based on the normalization coefficient.

In an embodiment of the present disclosure, the high-dimensional 8-antenna port multi-antenna panel codeword may be constructed based on the first beam of the first transmission layer and the codebook coefficients, which may satisfy that uplink MIMO supports 1-layer to 4-layer transmission requirements of the 8-antenna port multi-antenna panel and further enhance the uplink MIMO technology.

As illustrated in FIG. 13, FIG. 13 is a schematic diagram of another communication device 130 provided by an embodiment of the disclosure. The communication device 130 may be a network device, a terminal device (such as a first terminal device in the foregoing method embodiments), or a chip, a chip system, or a processor that supports the network device to implement the above method, or may be a chip, a chip system, or a processor that supports the terminal device to implement the above method. The apparatus may be used to implement the method as described in the above method embodiments. For details, please refer to the description in the above method embodiments.

The communication device 130 may include one or more processors 1301. The processor 1301 may be a general purpose processor or a dedicated processor, such as, a baseband processor or a central processor. The baseband processor is used for processing communication protocols and communication data. The central processor is used for controlling the communication device (e.g., base station, baseband chip, terminal device, terminal device chip, DU, or CU), executing computer programs, and processing data of the computer programs.

Optionally, the communication device 130 may include one or more memories 1302 on which a computer program 1303 may be stored. The processor 1301 executes the computer program 1303 to cause the communication device 130 to perform the method described in the above method embodiments. Optionally, data may also be stored in the memory 1302. The communication device 130 and the memory 1302 may be set separately or integrated together.

Optionally, the communication device 130 may also include a transceiver 1304 and an antenna 1305. The transceiver 1304 may be referred to as a transceiver unit, a transceiver element, or a transceiver circuit, for implementing the transceiver function. The transceiver 1304 may include a receiver and a transmitter. The receiver may be referred to as a receiver element or a receiving circuit, for implementing the receiving function. The transmitter may be referred to as a transmitter element or a transmitting circuit, for implementing the transmitting function.

Optionally, the communication device 130 may also include one or more interface circuits 1306. The interface circuits 1306 are used to receive code instructions and transmit them to the processor 1301. The processor 1301 runs the code instructions to cause the communication device 130 to perform the method described in the method embodiments.

The communication device 130 may be a terminal device for implementing functions of the foregoing embodiments.

In an implementation, the processor 1301 may include a transceiver for implementing the receiving and transmitting functions. The transceiver may be, for example, a transceiver circuit, an interface, or an interface circuit. The transceiver circuit, interface, or interface circuit for implementing the receiving and transmitting functions may be separated or may be integrated together. The transceiver circuit, interface, or interface circuit described above may be used for code/data reading and writing, or may be used for signal transmission or delivery.

In an implementation, the processor 1301 may store a computer program 1303. When the processor 1301 executes the computer program 1303, the communication device 130 is caused to perform the method as described in the above method embodiments. The above computer program may be solidified in the processor 1301, in such case, the processor 1301 may be implemented by hardware.

In an implementation, the communication device 130 may include circuits. The circuits may implement the sending, receiving or communicating function in the preceding method embodiments. The processor and transceiver described in this disclosure may be implemented on integrated circuits (ICs), analog ICs, radio frequency integrated circuits (RFICs), mixed signal ICs, application specific integrated circuits (ASICs), printed circuit boards (PCBs), and electronic devices. The processor and transceiver may also be produced using various IC process technologies, such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon-germanium (SiGe), gallium arsenide (GaAs) and so on.

The communication device in the above description of embodiments may be a network device or a terminal device (such as a first terminal device in the foregoing method embodiments), but the scope of the communication device described in the disclosure is not limited thereto, and the structure of the communication device may not be limited by FIG. 13. The communication device may be a stand-alone device or may be part of a larger device. For example, the described communication device may be:

(1) a stand-alone IC, chip, chip system or subsystem;
(2) a set of ICs including one or more ICs, optionally, the set of ICs may also include storage components for storing data and computer programs;
(3) an ASIC, such as a modem;
(4) a module that may be embedded within other devices;
(5) a receiver, a terminal device, a smart terminal device, a cellular phone, a wireless device, a handheld machine, a mobile unit, an in-vehicle device, a network device, a cloud device, an artificial intelligence device, and the like; and
(6) others.

For a case where the communication device may be a chip or a chip system, please refer to the schematic diagram of a chip shown in FIG. 14. In FIG. 14, the chip 140 includes a processor 1401 and an interface 1402. There may be one or more processors 1401, and there may be multiple interfaces 1402.

The processor 1401 is configured to

determine a first beam of a first transmission layer;
determine codebook coefficients configured for constructing an 8-antenna port codebook, in which, the codebook coefficients include first co-phase coefficients and an inter-panel compensation factor;
determine, according to the first beam and the codebook coefficients, an L-layer codeword of the 8-antenna port multi-antenna panel, where L is a positive integer greater than or equal to 1 and less than or equal to 4.

Optionally, the processor 1401 is further configured to:

determine a first codeword of the L-layer codeword of the 8-antenna port multi-antenna panel for a first antenna panel according to the first beam and the first co-phase coefficients;
for an ng-th antenna panel, determine an inter-panel compensation factor of the $n_g$-th antenna panel, where $2 \leq n_g \leq N_g$, $N_g$ is a count of antenna panels;
determine a second codeword of the L-layer codeword of the 8-antenna port multi-antenna panel for the $n_g$-th antenna panel according to the inter-panel compensation factor of the $n_g$-th antenna panel and the first codeword.

Optionally, the processor 1401 is further configured to:

determine a second beam orthogonal to the first beam;
determine, according to the first co-phase coefficients, second co-phase coefficients that are able to make codewords orthogonal;
determine the first codeword for the first antenna panel according to at least part of parameters of the first beam and the second beam, the first co-phase coefficients and the second co-phase coefficients.

Optionally, the processor 1401 is further configured to:

in a case of inter-panel fully coherence transmission, determine a first candidate codeword and a second candidate codeword by combining the first beam with the first co-phase coefficients and the second co-phase coefficients respectively;
determine a third candidate codeword and a fourth candidate codeword by combining the second beam with the first co-phase coefficients and the second co-phase coefficients respectively;
determine a first codeword of each transmission layer according to orthogonality of the first candidate codeword, the second candidate codeword, the third candidate codeword and the fourth candidate codeword.

Optionally, the processor 1401 is further configured to:

in a case of inter-panel non coherence transmission and a count of antenna panels being 2, determine a first candidate codeword by combining the first beam with the first co-phase coefficients;
determine a third candidate codeword by combining the second beam with the first co-phase coefficients;
for the first transmission layer and a second transmission layer being transmitted on the first antenna panel, determine one candidate codeword of the first candidate codeword and the third candidate codeword as a first codeword of the first transmission layer;
determine the other candidate codeword of the first candidate codeword and the third candidate codeword as a first codeword of the second transmission layer.

Optionally, the processor 1401 is further configured to:

in a case of inter-panel non coherence transmission and a count of antenna panels being 2, determine a first candidate codeword by combining the first beam with the first co-phase coefficients;
determine a second candidate codeword by combining the first beam with the second co-phase coefficients;
for the first transmission layer and a second transmission layer being transmitted on the first antenna panel, determine one candidate codeword among the first candidate codeword and the second candidate codeword as a first codeword of the first transmission layer;
determine the other candidate codeword among the first candidate codeword and the second candidate codeword as a first codeword of the second transmission layer.

Optionally, the processor 1401 is further configured to:

for a third transmission layer and a fourth transmission layer being transmitted on a second antenna panel, determine a second codeword of the third transmission layer corresponding to the second antenna panel by multiplying the inter-panel compensation factor of the second antenna panel by the first codeword of the first transmission layer;
determine a second of the fourth transmission layer corresponding to the second antenna panel by multiplying the inter-panel compensation factor of the second antenna panel by the first codeword of the second transmission layer.

Optionally, the processor 1401 is further configured to:

in a case of inter-panel non coherence transmission and a count of antenna panels being 4, determine a first candidate codeword by combining the first beam with the first co-phase coefficients;
for the first transmission layer being transmitted on the first panel, determine the first candidate codeword as the first codeword of the first transmission layer.

Optionally, the processor 1401 is further configured to:
determine the second codeword of a transmission layer corresponding to the ng-th antenna panel by multiplying the inter-panel compensation factor of the ng-th antenna panel by the first codeword of the first transmission layer.

Optionally, the processor 1401 is further configured to:

in case of inter-panel partial coherence transmission, antenna panels being divided into two groups, each group comprising two antenna panels, and coherence transmission being performed between antenna panels in each group,
determine a first candidate codeword by combining the first beam with the first co-phase coefficients, and determining a third candidate codeword by combining the second beam with the first co-phase coefficients;
for the first transmission layer and a second transmission layer being transmitted on the first antenna panel, determine one candidate codeword among the first candidate codeword and the third candidate codeword as a first code word of the first transmission layer;
determine the other candidate codeword among the first candidate codeword and the third candidate codeword as a first codeword of the second transmission layer.

Optionally, the processor 1401 is further configured to:

in case of inter-panel partial coherence transmission, antenna panels being divided into two groups, each group comprising two antenna panels, and coherence transmission being performed between antenna panels in each group,
determine a first candidate codeword by combining the first beam with the first co-phase coefficients, and determining a second candidate codeword by combining the first beam with the second co-phase coefficients;
for the first transmission layer and a second transmission layer being transmitted on the first antenna panel, determine one candidate codeword among the first candidate codeword and the second candidate codeword as a first code word of the first transmission layer;
determine the other candidate codeword among the first candidate codeword and the second candidate codeword as a first codeword of the second transmission layer.

Optionally, the processor 1401 is further configured to:

in a case where the first antenna panel is in a first group, for an nj-th antenna panel in the first group, obtain a second codeword of the first transmission layer corresponding to the nj-th antenna panel by multiplying an inter-panel compensation factor of the nj-th antenna panel and the first codeword of the first transmission layer;
obtain a second codeword of the second transmission layer corresponding to the nj-th antenna panel by multiplying an inter-panel compensation factor of the nj-th antenna panel and the first codeword of the second transmission layer, where $2 \leq nj \leq Ng$.

Optionally, the processor 1401 is further configured to:

for an ng-th antenna panel in a second group, obtain a second codeword of a third transmission layer corresponding to the ng-th antenna panel by multiplying an inter-panel compensation factor of the ng-th antenna panel and the first codeword of the first transmission layer;
obtain a second codeword of the fourth transmission layer corresponding to the ng-th antenna panel by multiplying an inter-panel compensation factor of the ng-th antenna panel and the first codeword of the second transmission layer.

Optionally, the processor 1401 is further configured to:

in case of inter-panel partial coherence transmission, antenna panels being divided into two groups, one of which comprising three antenna panels, and coherence transmission being performed between the three antenna panels in the group,
determine a first candidate codeword by combining the first beam and the first co-phase coefficients;
for the first transmission layer being transmitted on the first antenna panel, determine the first candidate codeword as a first codeword of the first transmission layer.

Optionally, the processor 1401 is further configured to:

determine a second candidate codeword by combining the first beam with the second co-phase coefficients;
determine a third candidate codeword by combining the second beam with the first co-phase coefficients;
obtain second codewords of remaining transmission layers by multiplying the inter-panel compensation factor of the ng-th antenna panel by the first codeword of the first transmission layer, the second candidate codeword and the third candidate codeword respectively.

Optionally, the processor 1401 is further configured to:

in a case where L<4, determine, according to the first beam and the codebook coefficients, a four-layer codeword of the 8-antenna port multi-antenna panel;
generate the L-layer codeword of the 8-antenna port multi-antenna panel by selecting any L columns of vectors from the four-layer codeword of the 8-antenna port multi-antenna panel.

Optionally, the processor 1401 is further configured to:

determine a transmission layer set corresponding to each of the antenna panels, wherein the transmission layer set comprises at least one transmission layer, and each transmission layer corresponds to one column of vector;
obtain the L columns of vectors by selecting at least one column of vector from each transmission layer set.

Optionally, the processor 1401 is further configured to:
determine a normalization coefficient of any codeword, and performing energy normalization processing on the any codeword based on the normalization coefficient.
Optionally, the chip 140further includes a memory 1403used for storing necessary computer programs and data.
In an embodiment of the present disclosure, the high-dimensional 8-antenna port multi-antenna panel codeword may be constructed based on the first beam of the first transmission layer and the codebook coefficients, which may satisfy that uplink MIMO supports 1-layer to 4-layer transmission requirements of the 8-antenna port multi-antenna panel and further enhance the uplink MIMO technology.
It is understandable by those skilled in the art that various illustrative logical blocks and steps listed in the embodiments of the disclosure may be implemented by electronic hardware, computer software, or a combination of both. Whether such function is implemented by hardware or software depends on the particular application and the design requirements of the entire system. Those skilled in the art may, for each particular application, use various methods to implement the described function, but such implementation should not be construed as being beyond the scope of protection of the embodiments of the disclosure.
An embodiment of the disclosure also provides a communication system. The system includes a communication device as a terminal device and a communication device as a network side device in the aforementioned embodiment of FIG. 8, or the system includes a communication device as a terminal device and a communication device as a network side device in the aforementioned embodiment of FIG. 9.
The disclosure also provides a readable storage medium having instructions stored thereon. When the instructions are executed by a computer, the function of any of the method embodiments described above is implemented.
The disclosure also provides a computer program product. When the computer program product is executed by a computer, the function of any of the method embodiments described above is implemented.
The above embodiments may be implemented in whole or in part by software, hardware, firmware, or any combination thereof. When implemented using software, it may be implemented, in whole or in part, in the form of a computer program product. The computer program product includes one or more computer programs. When loading and executing the computer programs on the computer, all or part of processes or functions described in the embodiments of the disclosure are implemented. The computer may be a general-purpose computer, a dedicated computer, a computer network, or other programmable devices. The computer program may be stored in a computer-readable storage medium or transmitted from one computer-readable storage medium to another computer-readable storage medium. For example, the computer program may be transmitted from one web site, computer, server, or data center to another web site, computer, server, or data center, in a wired manner (e.g., by using coaxial cables, fiber optics, or digital subscriber lines (DSLs) or wirelessly (e.g., by using infrared wave, wireless wave, or microwave). The computer-readable storage medium may be any usable medium to which the computer has access or a data storage device such as a server and a data center integrated by one or more usable mediums. The usable medium may be a magnetic medium (e.g., floppy disk, hard disk, and tape), an optical medium (e.g., a high-density digital video disc (DVD)), or a semiconductor medium (e.g., a solid state disk (SSD)).
Those skilled in the art understand that "first", "second", and other various numerical numbers involved in the disclosure are only described for the convenience of differentiation, and are not used to limit the scope of the embodiments of the disclosure, or indicate the order of precedence.
The term "at least one" in the disclosure may also be described as one or more, and the term "multiple" may be two, three, four, or more, which is not limited in the disclosure. In the embodiments of the disclosure, for a type of technical features, "first", "second", and "third", and "A", "B", "C" and "D" are used to distinguish different technical features of the type, the technical features described using the "first", "second", and "third", and "A", "B", "C" and "D" do not indicate any order of precedence or magnitude.

The correspondences shown in the tables in this disclosure may be configured or may be predefined. The values of information in the tables are merely examples and may be configured to other values, which are not limited by the disclosure. In configuring the correspondence between the information and the parameter, it is not necessarily required that all the correspondences illustrated in the tables must be configured. For example, the correspondences illustrated in certain rows in the tables in this disclosure may not be configured. For another example, the above tables may be adjusted appropriately, such as splitting, combining, and the like. The names of the parameters shown in the titles of the above tables may be other names that can be understood by the communication device, and the values or representations of the parameters may be other values or representations that can be understood by the communication device. Each of the above tables may also be implemented with other data structures, such as, arrays, queues, containers, stacks, linear tables, pointers, chained lists, trees, graphs, structures, classes, heaps, and Hash tables.

The term "predefine" in this disclosure may be understood as define, pre-define, store, pre-store, pre-negotiate, pre-configure, solidify, or pre-fire. Those skilled in the art may realize that the units and algorithmic steps of the various examples described in combination with the embodiments disclosed herein are capable of being implemented in the form of electronic hardware, or a combination of computer software and electronic hardware. Whether these functions are performed in the form of hardware or software depends on the specific application and design constraints of the technical solution. Those skilled in the art may use different methods to implement the described functions for each particular application, but such implementations should not be considered as beyond the scope of the disclosure.

It is clearly understood by those skilled in the field to which it belongs that, for the convenience and brevity of description, the specific working processes of the systems, apparatuses, and units described above may be referred to the corresponding processes in the preceding method embodiments, and will not be repeated herein.

The above implementations are only specific implementations of the disclosure, but the scope of protection of the disclosure is not limited thereto. Those skilled in the art familiar to this technical field can easily think of changes or substitutions in the technical scope disclosed by the disclosure, which shall be covered by the scope of protection of the disclosure. Therefore, the scope of protection of the disclosure shall be governed by the scope of protection of the stated claims.

**Claims**

1. A method for determining an uplink multiple input multiple output (MIMO) transmission 8-antenna port multi-antenna panel codebook, comprising:

   determining a first beam of a first transmission layer;
   determining codebook coefficients configured for constructing an 8-antenna port codebook, wherein the codebook coefficients comprise first co-phase coefficients and an inter-panel compensation factor; and
   determining, according to the first beam and the codebook coefficients, an L-layer codeword of the 8-antenna port multi-antenna panel, where L is a positive integer greater than or equal to 1 and less than or equal to 4.

2. The method according to claim 1, wherein determining, according to the first beam and the codebook coefficients, the L layer codeword of the 8-antenna port multi-antenna panel comprises:

   determining a first codeword of the L-layer codeword of the 8-antenna port multi-antenna panel for a first antenna panel according to the first beam and the first co-phase coefficients;
   for an $n_g$-th antenna panel, determining an inter-panel compensation factor of the $n_g$-th antenna panel, where $2 \leq n_g \leq N_g$, $N_g$ is a count of antenna panels; and
   determining a second codeword of the L-layer codeword of the 8-antenna port multi-antenna panel for the $n_g$-th antenna panel according to the inter-panel compensation factor of the $n_g$-th antenna panel and the first codeword.

3. The method according to claim 2, wherein determining the first codeword of the L-layer codeword of the 8-antenna port multi-antenna panel for the first antenna panel according to the first beam and the first co-phase coefficients comprises:

   determining a second beam orthogonal to the first beam;
   determining, according to the first co-phase coefficients, second co-phase coefficients that are able to make codewords orthogonal; and
   determining the first codeword for the first antenna panel according to at least part of parameters of the first beam and the second beam, the first co-phase coefficients and the second co-phase coefficients.

4. The method according to claim 3, wherein determining the first codeword for the first antenna panel according to at least part of parameters of the first beam and the second beam, the first co-phase coefficients and the second co-phase coefficients comprises:

in a case of inter-panel fully coherence transmission, determining a first candidate codeword and a second candidate codeword by combining the first beam with the first co-phase coefficients and the second co-phase coefficients respectively;

determining a third candidate codeword and a fourth candidate codeword by combining the second beam with the first co-phase coefficients and the second co-phase coefficients respectively; and

determining a first codeword of each transmission layer according to orthogonality of the first candidate codeword, the second candidate codeword, the third candidate codeword and the fourth candidate codeword.

5. The method according to claim 3, wherein determining the first codeword for the first antenna panel according to at least part of parameters of the first beam and the second beam, the first co-phase coefficients and the second co-phase coefficients comprises:

in a case of inter-panel non coherence transmission and a count of antenna panels being 2, determining a first candidate codeword by combining the first beam with the first co-phase coefficients;

determining a third candidate codeword by combining the second beam with the first co-phase coefficients;

for the first transmission layer and a second transmission layer being transmitted on the first antenna panel, determining one candidate codeword of the first candidate codeword and the third candidate codeword as a first codeword of the first transmission layer; and

determining the other candidate codeword of the first candidate codeword and the third candidate codeword as a first codeword of the second transmission layer.

6. The method according to claim 3, wherein determining the first codeword for the first antenna panel according to at least part of parameters of the first beam and the second beam, the first co-phase coefficients and the second co-phase coefficients comprises:

in a case of inter-panel non coherence transmission and a count of antenna panels being 2, determining a first candidate codeword by combining the first beam with the first co-phase coefficients;

determining a second candidate codeword by combining the first beam with the second co-phase coefficients;

for the first transmission layer and a second transmission layer being transmitted on the first antenna panel, determining one candidate codeword among the first candidate codeword and the second candidate codeword as a first codeword of the first transmission layer; and

determining the other candidate codeword among the first candidate codeword and the second candidate codeword as a first codeword of the second transmission layer.

7. The method according to claim 5 or 6, wherein determining the second codeword of the L-layer codeword of the 8-antenna port multi-antenna panel for the $n_g$-th antenna panel according to the inter-panel compensation factor of the $n_g$-th antenna panel and the first codeword comprises:

for a third transmission layer and a fourth transmission layer being transmitted on a second antenna panel, determining a second codeword of the third transmission layer corresponding to the second antenna panel by multiplying the inter-panel compensation factor of the second antenna panel by the first codeword of the first transmission layer; and

determining a second of the fourth transmission layer corresponding to the second antenna panel by multiplying the inter-panel compensation factor of the second antenna panel by the first codeword of the second transmission layer.

8. The method according to claim 3, wherein determining the first codeword for the first antenna panel according to at least part of parameters of the first beam and the second beam, the first co-phase coefficients and the second co-phase coefficients comprises:

in a case of inter-panel non coherence transmission and a count of antenna panels being 4, determining a first candidate codeword by combining the first beam with the first co-phase coefficients; and

for the first transmission layer being transmitted on the first panel, determining the first candidate codeword as the first codeword of the first transmission layer.

9. The method according to claim 8, wherein determining the second codeword of the L-layer codeword of the 8-antenna port multi-antenna panel for the $n_g$-th antenna panel according to the inter-panel compensation factor of the $n_g$-th antenna panel and the first codeword comprises:
determining the second codeword of a transmission layer corresponding to the $n_g$-th antenna panel by multiplying the inter-panel compensation factor of the $n_g$-th antenna panel by the first codeword of the first transmission layer.

10. The method according to claim 3, wherein determining the first codeword for the first antenna panel according to at least part of parameters of the first beam and the second beam, the first co-phase coefficients and the second co-phase coefficients comprises:

   in case of inter-panel partial coherence transmission, antenna panels being divided into two groups, each group comprising two antenna panels, and coherence transmission being performed between antenna panels in each group,
   determining a first candidate codeword by combining the first beam with the first co-phase coefficients, and determining a third candidate codeword by combining the second beam with the first co-phase coefficients;
   for the first transmission layer and a second transmission layer being transmitted on the first antenna panel, determining one candidate codeword among the first candidate codeword and the third candidate codeword as a first code word of the first transmission layer; and
   determining the other candidate codeword among the first candidate codeword and the third candidate codeword as a first codeword of the second transmission layer.

11. The method according to claim 3, wherein determining the first codeword for the first antenna panel according to at least part of parameters of the first beam and the second beam, the first co-phase coefficients and the second co-phase coefficients comprises:

   in case of inter-panel partial coherence transmission, antenna panels being divided into two groups, each group comprising two antenna panels, and coherence transmission being performed between antenna panels in each group,
   determining a first candidate codeword by combining the first beam with the first co-phase coefficients, and determining a second candidate codeword by combining the first beam with the second co-phase coefficients;
   for the first transmission layer and a second transmission layer being transmitted on the first antenna panel, determining one candidate codeword among the first candidate codeword and the second candidate codeword as a first code word of the first transmission layer; and
   determining the other candidate codeword among the first candidate codeword and the second candidate codeword as a first codeword of the second transmission layer.

12. The method according to claim 10 or 11, further comprising:

   in a case where the first antenna panel is in a first group, for an $n_j$-th antenna panel in the first group, obtaining a second codeword of the first transmission layer corresponding to the $n_j$-th antenna panel by multiplying an inter-panel compensation factor of the $n_j$-th antenna panel and the first codeword of the first transmission layer; and obtaining a second codeword of the second transmission layer corresponding to the $n_j$-th antenna panel by multiplying an inter-panel compensation factor of the $n_j$-th antenna panel and the first codeword of the second transmission layer, where $2 \leq n_j \leq N_g$.

13. The method according to claim 10 or 11, further comprising:

   for an $n_g$-th antenna panel in a second group, obtaining a second codeword of a third transmission layer corresponding to the $n_g$-th antenna panel by multiplying an inter-panel compensation factor of the $n_g$-th antenna panel and the first codeword of the first transmission layer; and
   obtaining a second codeword of the fourth transmission layer corresponding to the $n_g$-th antenna panel by multiplying an inter-panel compensation factor of the $n_g$-th antenna panel and the first codeword of the second transmission layer.

14. The method according to claim 3, wherein determining the first codeword for the first antenna panel according to at least part of parameters of the first beam and the second beam, the first co-phase coefficients and the second co-phase coefficients comprises:

in case of inter-panel partial coherence transmission, antenna panels being divided into two groups, one of which comprising three antenna panels, and coherence transmission being performed between the three antenna panels in the group,

determining a first candidate codeword by combining the first beam and the first co-phase coefficients; and for the first transmission layer being transmitted on the first antenna panel, determining the first candidate codeword as a first codeword of the first transmission layer.

15. The method according to claim 14, further comprising:

determining a second candidate codeword by combining the first beam with the second co-phase coefficients; determining a third candidate codeword by combining the second beam with the first co-phase coefficients; and obtaining second codewords of remaining transmission layers by multiplying the inter-panel compensation factor of the $n_g$-th antenna panel by the first codeword of the first transmission layer, the second candidate codeword and the third candidate codeword respectively.

16. The method according to any one of claims 1-15, wherein determining, according to the first beam and the codebook coefficients, the L-layer codeword of the 8-antenna port multi-antenna panel comprises:

in a case where L<4, determining, according to the first beam and the codebook coefficients, a four-layer codeword of the 8-antenna port multi-antenna panel; and generating the L-layer codeword of the 8-antenna port multi-antenna panel by selecting any L columns of vectors from the four-layer codeword of the 8-antenna port multi-antenna panel.

17. The method according to claim 16, wherein selecting any L columns of vectors from the four-layer codeword of the 8-antenna port multi-antenna panel comprises:

determining a transmission layer set corresponding to each of the antenna panels, wherein the transmission layer set comprises at least one transmission layer, and each transmission layer corresponds to one column of vector; and obtaining the L columns of vectors by selecting at least one column of vector from each transmission layer set.

18. The method according to any one of claims 1 to 15, further comprising:
determining a normalization coefficient of any codeword, and performing energy normalization processing on the any codeword based on the normalization coefficient.

19. A communication device, comprising:
a processing module, configured to determine a first beam of a first transmission layer; determine codebook coefficients configured for constructing an 8-antenna port codebook, wherein the codebook coefficients comprise first co-phase coefficients and an inter-panel compensation factor; determine, according to the first beam and the codebook coefficients, an L-layer codeword of the 8-antenna port multi-antenna panel, where L is a positive integer greater than or equal to 1 and less than or equal to 4.

20. A communication device, comprising a processor and a memory having a computer program stored thereon, wherein the processor is configured to perform the computer program stored on the memory, causing the device to perform the method according to any one of claims 1 to 18.

21. A communication device, comprising a processor and an interface circuit; wherein

the interface circuit is configured to receive code instructions and transmit the code instructions to the processor; the processor is configured to run the code instructions to perform the method according to any one of claims 1 to 18.

22. A computer-readable storage medium configured to store instructions that, when executed, cause the method according to any one of claims 1 to 18 to be implemented.

FIG. 1

| | |
|---|---|
| determining a first beam of a first transmission layer | S201 |
| determining codebook coefficients configured for constructing an 8-antenna port codebook, wherein the codebook coefficients comprise first co-phase coefficients and an inter-panel compensation factor | S202 |
| determining, according to the first beam and the codebook coefficients, an L-layer codeword of the 8-antenna port multi-antenna panel | S203 |

FIG. 2

determining a first beam of a first transmission layer — S301

determining codebook coefficients configured for constructing an 8-antenna port codebook, wherein the codebook coefficients comprise first co-phase coefficients and an inter-panel compensation factor — S302

determining a second beam orthogonal to the first beam — S303

determining, according to the first co-phase coefficients, second co-phase coefficients that are able to make codewords orthogonal — S304

in a case of inter-panel fully coherence transmission, determining a first candidate codeword and a second candidate codeword by combining the first beam with the first co-phase coefficients and the second co-phase coefficients respectively — S305

determining a third candidate codeword and a fourth candidate codeword by combining the second beam with the first co-phase coefficients and the second co-phase coefficients respectively — S306

determining a first codeword of each transmission layer according to orthogonality of the first candidate codeword, the second candidate codeword, the third candidate codeword and the fourth candidate codeword — S307

determining a second codeword of the L-layer codeword of the 8-antenna port multi-antenna panel for the $n_g$-th antenna panel according to the inter-panel compensation factor of the $n_g$-th antenna panel and the first codeword — S308

FIG. 3

determining a first beam of a first transmission layer ⟋ S401

↓

determining codebook coefficients configured for constructing an 8-antenna port codebook, wherein the codebook coefficients comprise first co-phase coefficients and an inter-panel compensation factor ⟋ S402

↓

determining a second beam orthogonal to the first beam ⟋ S403

↓

in a case of inter-panel non coherence transmission and a count of antenna panels being 2, determining a first candidate codeword by combining the first beam with the first co-phase coefficients; determining a third candidate codeword by combining the second beam with the first co-phase coefficients ⟋ S404

↓

for the first transmission layer and a second transmission layer being transmitted on the first antenna panel, determining one candidate codeword of the first candidate codeword and the third candidate codeword as a first codeword of the first transmission layer;
determining the other candidate codeword of the first candidate codeword and the third candidate codeword as a first codeword of the second transmission layer ⟋ S405

↓

for a third transmission layer and a fourth transmission layer being transmitted on a second antenna panel, determining a second codeword of the third transmission layer corresponding to the second antenna panel by multiplying the inter-panel compensation factor of the second antenna panel by the first codeword of the first transmission layer;
determining a second of the fourth transmission layer corresponding to the second antenna panel by multiplying the inter-panel compensation factor of the second antenna panel by the first codeword of the second transmission layer ⟋ S406

FIG. 4

```
┌──────────────────────────────────────────────────────────────────┐      ╮ S501
│         determining a first beam of a first transmission layer      │    ╯
└──────────────────────────────────────────────────────────────────┘
                                    │
                                    ▼
┌──────────────────────────────────────────────────────────────────┐      ╮ S502
│ determining codebook coefficients configured for constructing an 8-antenna│ ╯
│  port codebook, wherein the codebook coefficients comprise first co-phase  │
│          coefficients and an inter-panel compensation factor          │
└──────────────────────────────────────────────────────────────────┘
                                    │
                                    ▼
┌──────────────────────────────────────────────────────────────────┐      ╯ S503
│ determining, according to the first co-phase coefficients, second co-phase│
│          coefficients that are able to make codewords orthogonal        │
└──────────────────────────────────────────────────────────────────┘
                                    │
                                    ▼
┌──────────────────────────────────────────────────────────────────┐
│ in a case of inter-panel non coherence transmission and a count of antenna│      S504
│  panels being 2, determining a first candidate codeword by combining the │    ╮
│      first beam with the first co-phase coefficients; determining a second │    ╯
│ candidate codeword by combining the first beam with the second co-phase │
│                              coefficients                              │
└──────────────────────────────────────────────────────────────────┘
                                    │
                                    ▼
┌──────────────────────────────────────────────────────────────────┐
│    for the first transmission layer and a second transmission layer being │      S505
│ transmitted on the first antenna panel, determining one candidate codeword│    ╮
│ among the first candidate codeword and the second candidate codeword as a │    ╯
│     first codeword of the first transmission layer; determining the other │
│    candidate codeword among the first candidate codeword and the second │
│    candidate codeword as a first codeword of the second transmission layer │
└──────────────────────────────────────────────────────────────────┘
                                    │
                                    ▼
┌──────────────────────────────────────────────────────────────────┐
│   for a third transmission layer and a fourth transmission layer being │
│ transmitted on a second antenna panel, determining a second codeword of │
│   the third transmission layer corresponding to the second antenna panel by│      S506
│ multiplying the inter-panel compensation factor of the second antenna panel│    ╮
│ by the first codeword of the first transmission layer; determining a second of│  ╯
│   the fourth transmission layer corresponding to the second antenna panel by│
│ multiplying the inter-panel compensation factor of the second antenna panel│
│         by the first codeword of the second transmission layer         │
└──────────────────────────────────────────────────────────────────┘
```

FIG. 5

| | |
|---|---|
| determining a first beam of a first transmission layer | S601 |
| determining codebook coefficients configured for constructing an 8-antenna port codebook, wherein the codebook coefficients comprise first co-phase coefficients and an inter-panel compensation factor | S602 |
| in a case of inter-panel non coherence transmission and a count of antenna panels being 4, determining a first candidate codeword by combining the first beam with the first co-phase coefficients | S603 |
| for the first transmission layer being transmitted on the first panel, determining the first candidate codeword as the first codeword of the first transmission layer | S604 |
| determining the second codeword of a transmission layer corresponding to the $n_g$-th antenna panel by multiplying the inter-panel compensation factor of the $n_g$-th antenna panel by the first codeword of the first transmission layer | S605 |

FIG. 6

| determining a first beam of a first transmission layer | S701 |

↓

| determining codebook coefficients configured for constructing an 8-antenna port codebook, wherein the codebook coefficients comprise first co-phase coefficients and an inter-panel compensation factor | S702 |

↓

| determining a second beam orthogonal to the first beam | S703 |

↓

| in case of inter-panel partial coherence transmission, antenna panels being divided into two groups, each group comprising two antenna panels, and coherence transmission being performed between antenna panels in each group, determining a first candidate codeword by combining the first beam with the first co-phase coefficients, and determining a third candidate codeword by combining the second beam with the first co-phase coefficients | S704 |

↓

| for the first transmission layer and a second transmission layer being transmitted on the first antenna panel, determining one candidate codeword among the first candidate codeword and the third candidate codeword as a first code word of the first transmission layer; determining the other candidate codeword among the first candidate codeword and the third candidate codeword as a first codeword of the second transmission layer | S705 |

↓

| in a case where the first antenna panel is in a first group, for an nj-th antenna panel in the first group, obtaining a second codeword of the first transmission layer corresponding to the nj-th antenna panel by multiplying an inter-panel compensation factor of the nj-th antenna panel and the first codeword of the first transmission layer; obtaining a second codeword of the second transmission layer corresponding to the nj-th antenna panel by multiplying an inter-panel compensation factor of the nj-th antenna panel and the first codeword of the second transmission layer | S706 |

↓

| for an ng-th antenna panel in a second group, obtaining a second codeword of a third transmission layer corresponding to the ng-th antenna panel by multiplying an inter-panel compensation factor of the ng-th antenna panel and the first codeword of the first transmission layer; obtaining a second codeword of the fourth transmission layer corresponding to the ng-th antenna panel by multiplying an inter-panel compensation factor of the ng-th antenna panel and the first codeword of the second transmission layer | S707 |

FIG. 7

determining a first beam of a first transmission layer —⟋ S801

determining codebook coefficients configured for constructing an 8-antenna port codebook, wherein the codebook coefficients comprise first co-phase coefficients and an inter-panel compensation factor —⟋ S802

determining a second beam orthogonal to the first beam —⟋ S803

determining, according to the first co-phase coefficients, second co-phase coefficients that are able to make codewords orthogonal —⟋ S804

in case of inter-panel partial coherence transmission, antenna panels being divided into two groups, one of which comprising three antenna panels, and coherence transmission being performed between the three antenna panels in the group, determining a first candidate codeword by combining the first beam and the first co-phase coefficients —⟋ S805

for the first transmission layer being transmitted on the first antenna panel, determining the first candidate codeword as a first codeword of the first transmission layer —⟋ S806

determining a second candidate codeword by combining the first beam with the second co-phase coefficients; determining a third candidate codeword by combining the second beam with the first co-phase coefficients —⟋ S807

obtaining second codewords of remaining transmission layers by multiplying the inter-panel compensation factor of the $n_g$-th antenna panel by the first codeword of the first transmission layer, the second candidate codeword and the third candidate codeword respectively —⟋ S808

FIG. 8

determining a first beam of a first transmission layer  S901

determining codebook coefficients configured for constructing an 8-antenna port codebook, wherein the codebook coefficients comprise first co-phase coefficients and an inter-panel compensation factor  S902

in a case where L<4, determining, according to the first beam and the codebook coefficients, a four-layer codeword of the 8-antenna port multi-antenna panel  S903

generating the L-layer codeword of the 8-antenna port multi-antenna panel by selecting any L columns of vectors from the four-layer codeword of the 8-antenna port multi-antenna panel  S904

FIG. 9

receiving indication information sent by a network device  S1001

determining the target precoding matrix corresponding to the uplink transmission from the L-layer codeword of the 8-antenna port multi-antenna panel for uplink MIMO transmission  S1002

precoding the PUSCH based on the target precoding matrix and sending the precoded PUSCH to the network device  S1003

FIG. 10

determining indication information, and sending the indication information to a terminal device, wherein the indication information instructs the terminal device to determine a target precoding matrix corresponding to uplink transmission from an L-layer codebook of the 8-antenna port multi-antenna panel for uplink MIMO transmission  S1101

receiving a PUSCH transmission sent by the terminal device, in which, the PUSCH transmission is obtained by precoding by the terminal device based on the target precoding matrix  S1102

FIG. 11

communication apparatus

transceiver
module — 1201

processing
module — 1202

— 120

FIG. 12

communication apparatus

interface circuit — 1306

processor — 1301

antenna — 1305

memory — 1302

computer program — 1303

transceiver — 1304

— 130

FIG. 13

chip

processor — 1401

interface — 1402

memory — 1403

— 140

FIG. 14

## INTERNATIONAL SEARCH REPORT

International application No.

**PCT/CN2022/120606**

| A. CLASSIFICATION OF SUBJECT MATTER |
|---|
| H04B7/0456(2017.01)i;H04L1/00(2006.01)i |

According to International Patent Classification (IPC) or to both national classification and IPC

| B. FIELDS SEARCHED |
|---|

Minimum documentation searched (classification system followed by classification symbols)

IPC: H04B H04L

Documentation searched other than minimum documentation to the extent that such documents are included in the fields searched

Electronic data base consulted during the international search (name of data base and, where practicable, search terms used)

CNABS, CNTXT, ENTXTC, ENTXT, VEN, IEEE, CNKI, 3GPP: 多输入多输出, 天线, 面板, 端口, 码本, 码字, 共相位系数, 补偿因子, 传输层, 波束, 正交, 相干; MIMO, Multiple Input Multiput Output, antenna, panel?, port, codebook, codeword, cophas+ coefficient, compensation factor, transport layer, beam, orthogonal, coherent

| C. DOCUMENTS CONSIDERED TO BE RELEVANT | | |
|---|---|---|
| Category* | Citation of document, with indication, where appropriate, of the relevant passages | Relevant to claim No. |
| A | CN 112260735 A (GUANGDONG OPPO MOBILE COMMUNICATIONS CO., LTD.) 22 January 2021 (2021-01-22) description, paragraphs 7-52 | 1-22 |
| A | CN 108365877 A (HUAWEI TECHNOLOGIES CO., LTD.) 03 August 2018 (2018-08-03) entire document | 1-22 |
| A | CN 114598366 A (HUAWEI TECHNOLOGIES CO., LTD.) 07 June 2022 (2022-06-07) entire document | 1-22 |
| A | WO 2020257079 A1 (QUALCOMM INC.) 24 December 2020 (2020-12-24) entire document | 1-22 |
| A | WO 2022188253 A1 (GUANGDONG OPPO MOBILE COMMUNICATIONS CO., LTD.) 15 September 2022 (2022-09-15) entire document | 1-22 |
| A | HUAWEI et al. "DL Codebook design for multi-panel structured MIMO in NR" *3GPP TSG RAN WG1 Meeting #88, R1-1701691*, 06 February 2017 (2017-02-06), entire document | 1-22 |

☐ Further documents are listed in the continuation of Box C.  ☑ See patent family annex.

| * Special categories of cited documents: | |
|---|---|
| "A" document defining the general state of the art which is not considered to be of particular relevance | "T" later document published after the international filing date or priority date and not in conflict with the application but cited to understand the principle or theory underlying the invention |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **05 May 2023** | **21 May 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**EP 4 593 299 A1**

International application No.

**PCT/CN2022/120606**

| Patent document cited in search report | | | Publication date (day/month/year) | Patent family member(s) | | | Publication date (day/month/year) |
|---|---|---|---|---|---|---|---|
| CN | 112260735 | A | 22 January 2021 | CN | 112260735 | B | 28 January 2022 |
| CN | 108365877 | A | 03 August 2018 | EP | 3567743 | A1 | 13 November 2019 |
| | | | | EP | 3567743 | A4 | 22 January 2020 |
| | | | | US | 2019349105 | A1 | 14 November 2019 |
| | | | | US | 11196501 | B2 | 07 December 2021 |
| | | | | WO | 2018137486 | A1 | 02 August 2018 |
| | | | | CN | 108365877 | B | 01 June 2021 |
| | | | | US | 11196501 | B2 | 07 December 2021 |
| CN | 114598366 | A | 07 June 2022 | WO | 2022117046 | A1 | 09 June 2022 |
| WO | 2020257079 | A1 | 24 December 2020 | WO | 2020257079 | A9 | 06 May 2021 |
| | | | | US | 2020403656 | A1 | 24 December 2020 |
| | | | | US | 11050465 | B2 | 29 June 2021 |
| | | | | EP | 3987681 | A1 | 27 April 2022 |
| | | | | WO | 2020257079 | A1 | 24 December 2020 |
| | | | | CN | 114128169 | A | 01 March 2020 |
| | | | | IN | 202127057040 | A | 22 April 2022 |
| WO | 2022188253 | A1 | 15 September 2022 | CN | 115085879 | A | 20 September 2022 |